# EUROPEAN PATENT APPLICATION

(11) **EP 4 145 778 A1**
(43) Date of publication of application: **08.03.2023**
(21) Application number: 21818813.4
(22) Date of filing: 12.05.2021
(51) Int. Cl.: H04L 12/70

(54) **DATA MESSAGE FORWARDING METHOD, NETWORK NODE, SYSTEM, AND STORAGE MEDIUM**

(30) Priority: 30.05.2020 CN 202010480553
(71) Applicant: Huawei Technologies Co., Ltd., Shenzhen, Guangdong 518129 (CN)
(72) Inventor: GENG, Xuesong, Shenzhen, Guangdong 518129 (CN); LI, Zhenbin, Shenzhen, Guangdong 518129 (CN); PENG, Shuping, Shenzhen, Guangdong 518129 (CN); LI, Lei, Shenzhen, Guangdong 518129 (CN)
(74) Representative: Maiwald GmbH
(86) International application number: PCT/CN2021/093373
(87) International publication number: WO 2021/244247

(57) **Abstract**

Embodiments of this application disclose a data packet forwarding method and system, a network node, and a storage medium, and belong to the field of communication technologies. In embodiments of this application, the network node may receive a first data packet, where the first data packet carries first traffic feature data of a first data flow to which the first data packet belongs. The network node may determine a data forwarding policy based on the first traffic feature data. Because the data forwarding policy includes a policy used when the network node forwards a data packet included in the first data flow, the network node may forward the data packet based on the data forwarding policy. It may be learned that, in this solution, there is no need for a controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner.

## Description

Embodiments of this application claim priority to Chinese Patent Application No. 202010480553.7, filed on May 30, 2020 and entitled "DATA PACKET FORWARDING METHOD AND SYSTEM, NETWORK NODE, AND STORAGE MEDIUM", which is incorporated in embodiments of this application by reference in its entirety.

### TECHNICAL FIELD

Embodiments of this application relate to the field of communication technologies, and in particular, to a data packet forwarding method and system, a network node, and a storage medium.

### BACKGROUND

Currently, to manage data packets transmitted in a network, traffic feature data of data flows to which the data packets transmitted in the network belong needs to be obtained, and each data flow is analyzed based on the traffic feature data to perform network anomaly detection, cyber security analysis, network planning, and the like, to determine a forwarding policy to properly forward the data packets transmitted in the network, for example, determining a forwarding path, a forwarding bandwidth, and a forwarding rate of each data packet in the network.

In a related technology, a network node monitors and analyzes a data packet flowing through the network node, and determines traffic feature data of a data flow to which each data packet belongs. Then, the network node reports the determined traffic feature data to a controller. The controller performs centralized processing and analysis on the traffic feature data of each data flow to obtain a forwarding policy of each data flow transmitted in a network, and delivers the forwarding policy to the network node. Then, the network node forwards the received data packet based on the forwarding policy.

However, the process that the controller collects the traffic feature data, performs centralized processing and analysis to obtain the forwarding policy, and then delivers the forwarding policy to the network node, and the network node executes the forwarding policy is time-consuming. A proper forwarding policy is urgently needed to cope with an emergency in the network. In this case, the controller cannot make a decision in a timely manner. As a result, the decision made by the controller is invalid. It may be learned that real-time performance of determining the forwarding policy by the controller in the related technology is poor.

### SUMMARY

Embodiments of this application provide a data packet forwarding method and system, a network node, and a storage medium, to improve real-time performance of determining a data forwarding policy, and cope with an emergency in a network in a timely manner. The technical solutions are as follows.

According to a first aspect, a data packet forwarding method is provided. The method includes:
A network node receives a first data packet, where the first data packet carries first traffic feature data, and the first traffic feature data is traffic feature data of a first data flow to which the first data packet belongs; the network node determines a data forwarding policy based on the first traffic feature data, where the data forwarding policy includes a policy used when the network node forwards a data packet included in the first data flow; and the network node forwards the first data packet based on the data forwarding policy.

Optionally, the first traffic feature data is determined by an upstream device in a domain to which the network node belongs; or the first traffic feature data is determined by customer premises equipment.

It should be noted that, if the customer premises equipment may directly obtain the first traffic feature data of the first data flow to which the sent first data packet belongs, the customer premises equipment may include the obtained first traffic feature data in the first data packet. For example, the customer premises equipment is an operation server. The operation server may learn of the first traffic feature data such as a flow rate and a bandwidth of the first data flow to which the first data packet sent by the operation server belongs. In this case, the operation server may include the obtained first traffic feature data in the first data packet.

If a measurement technology is deployed on the upstream device, traffic monitoring may be performed on a data flow to which a data packet received by the upstream device belongs, and traffic feature data is extracted. In this case, the upstream device may include, in the first data packet, the first traffic feature data extracted by monitoring the first data flow.

In addition, in this embodiment of this application, one or more fields may be defined in the data packet to carry the traffic feature data. For example, one or more fields may be defined based on a packet format designed in a protocol used for transmitting the data packet.

Optionally, the first data packet is an Internet Protocol version 6 (Internet protocol version 6, IPv6) packet. The first traffic feature data may be carried in an extension header of the first data packet. The extension header is a hop-by-hop options header, a destination options header, or a segment routing header.

Optionally, when the extension header is the segment routing header, the first traffic feature data may be carried in a segment identifier (segment identifier, SID) field or a type-length-value (type-length-value, TLV) field of the segment routing header.

It should be noted that the first traffic feature data includes a plurality of types of feature data. All the feature data may be carried in one extension header, or may be carried in a plurality of extension headers, and each extension header carries a part of feature data.

It should be noted that different devices may determine different types of traffic feature data, and this is related to the measurement technology deployed on the device. In addition, with transmission of the first data packet, a device through which the first data packet passes may include, in a corresponding field of the data packet, some feature data that can be determined by the device. In other words, a plurality of types of feature data included in the first traffic feature data may be determined by one or more devices.

Optionally, the first traffic feature data includes one or more of a flow rate, a bandwidth, traffic shaping feature data, traffic burst feature data, and traffic statistics feature data of the first data flow.

The traffic shaping feature data includes a traffic shaping parameter configured on a device that determines the traffic feature data of the first data flow. The traffic shaping parameter includes one or more of a committed information rate (committed information rate, CIR), a committed burst size (committed burst size, CBS), an excess burst size (excess burst size, EBS), a peak information rate (peak information rate, PIR), and a peak burst size (peak burst size, PBS).

The traffic burst feature data includes one or more of a burst size, burst duration, and a burst rate.

The traffic statistics feature data includes one or more of a maximum packet quantity per interval, a maximum payload size, an average packet quantity per interval, and an average payload size in a statistics interval.

Optionally, the device may determine the first traffic feature data at intervals, and include the determined first traffic feature data in one received data packet included in the first data flow. The interval may be greater than an interval between two adjacent data packets included in the first data flow. In other words, there is no need to carry the first traffic feature data in every data packet. Alternatively, the device may include the determined first traffic feature data in each carried data packet. In other words, within an interval, the device may include first traffic feature data determined in a last interval in a received data packet included in a first data flow in this interval.

In this embodiment of this application, after receiving the first data packet, the network node may extract the first traffic feature data, and determine the data forwarding policy based on the first traffic feature data. The data forwarding policy may include the policy used when the network node forwards the data packet included in the first data flow. In other words, in this solution, the network node may determine the data forwarding policy in a timely manner based on the traffic feature data, to perform traffic optimization and the like on the data flow.

In this embodiment of this application, the network node may make a decision, or a controller and the network node may be combined to make a decision. In other words, in this embodiment of this application, there are a plurality of implementations in which the network node determines the data forwarding policy based on the first traffic feature data. It should be noted that the following several implementations may be separately used or may be used in combination.

### First implementation

The network node is a head node in a domain to which the network node belongs.

Optionally, that the network node determines a data forwarding policy based on the first traffic feature data includes: If a variation between the first traffic feature data and stored reference traffic feature data exceeds a first threshold, the network node updates a stored forwarding policy based on the first traffic feature data to obtain the data forwarding policy; or if a variation between the first traffic feature data and stored reference traffic feature data does not exceed a first threshold, the network node determines a stored forwarding policy as the data forwarding policy.

It should be noted that, in this embodiment of this application, the reference traffic feature data stored in the network node has two specific implementations. The following describes the two specific implementations.

### First specific implementation

The reference traffic feature data is traffic feature data carried in a second data packet. The second data packet is a data packet received by the network node before the network node receives the first data packet.

In this embodiment of this application, the network node receives the first data packet at a first moment. Both the second data packet and the first data packet belong to the first data flow. The network node may extract and store the reference traffic feature data.

In this embodiment of this application, the network node may compare the first traffic feature data extracted in real time with the previously extracted and stored reference traffic feature data. If the variation between the first traffic feature data and the reference traffic feature data exceeds the first threshold, it indicates that a current traffic feature of the first data flow obviously changes. Therefore, the data forwarding policy needs to be adjusted. In other words, the network node needs to update the stored forwarding policy.

### Second specific implementation

The reference traffic feature data is obtained by the network node by predicting traffic feature data of the first data flow at a first moment. The first moment is a moment at which the first data packet is received.

Optionally, before the network node determines the data forwarding policy based on the first traffic feature data, the method further includes: The network node predicts the traffic feature data of the first data flow at the first moment based on a traffic feature model of the first data flow, to obtain the reference traffic feature data, where the traffic feature model is used to describe a change of a traffic feature of the first data flow. In other words, in this embodiment of this application, the network node may construct the traffic feature model based on traffic feature data carried in a previously received data packet included in the data flow, and predict traffic feature data at a later moment based on the traffic feature model. The network node may further preplan a forwarding policy at a later moment based on the predicted traffic feature data, and store the preplanned forwarding policy.

Optionally, after the network node receives the first data packet, the method further includes: The network node updates the traffic feature model based on the first traffic feature data. In other words, the network node may update the traffic feature model in real time.

In this embodiment of this application, the network node may compare the first traffic feature data extracted in real time with the stored and predicted reference traffic feature data. If the variation between the first traffic feature data and the reference traffic feature data exceeds the first threshold, it indicates that a current traffic feature of the first data flow obviously changes compared with a predicted traffic feature, and the previously predicted and stored forwarding policy may become invalid. Therefore, the data forwarding policy needs to be adjusted. In other words, the network node needs to update the stored forwarding policy.

In the second specific implementation, the network node may learn the traffic feature of the data flow based on the traffic feature model, predict the traffic feature data of the data flow, and preplan the data forwarding policy based on the predicted traffic feature data. In other words, traffic planning may be implemented in advance. When receiving the data packet, the network node may determine the data forwarding policy based on the previously planned data forwarding policy and the traffic feature data carried in the data packet at the current moment. For example, if the traffic feature data carried in the data packet at the current moment is slightly different from the traffic feature data predicted during previous planning, the previously planned data forwarding policy may be directly used to forward the data packet. This can improve decision-making efficiency.

In the first implementation, the data forwarding policy may include a local timeslot orchestration parameter. In other words, in this embodiment of this application, the network node may update the stored local timeslot orchestration parameter based on the first traffic feature data. This is described in the following descriptions.

Optionally, the network node is a head node in a domain to which the network node belongs. That the network node updates a stored forwarding policy based on the first traffic feature data includes: The network node obtains a global timeslot orchestration parameter, where the global timeslot orchestration parameter indicates transmission timeslot occupation of a plurality of aggregated flows, and each aggregated flow includes a plurality of data flows that flow from the network node to a same tail node in the domain; and the network node updates the stored local timeslot orchestration parameter based on the global timeslot orchestration parameter and the first traffic feature data, where the local timeslot orchestration parameter indicates transmission timeslot occupation of each data flow included in the plurality of aggregated flows when the global timeslot orchestration parameter is met.

Optionally, the transmission timeslot occupation includes at least one of a transmission timeslot occupied percentage and a transmission timeslot occupied location.

In this embodiment of this application, the domain to which the network node belongs may correspond to one controller. The controller may be configured to perform global timeslot orchestration to aggregate the plurality of data flows with a same source and sink into one aggregated flow. In other words, the controller may determine the plurality of data flows that flow from the network node to the same tail node in the domain as one aggregated flow. In this way, a plurality of aggregated flows may be determined, and transmission timeslot occupation of the plurality of aggregated flows may be determined. In other words, a transmission timeslot occupied percentage and a transmission timeslot occupied location of each of the plurality of aggregated flows may be determined. The global timeslot orchestration parameter may indicate the transmission timeslot occupation of the plurality of aggregated flows. The controller may send the global timeslot orchestration parameter to the network node.

Optionally, the controller may periodically send the global timeslot orchestration parameter to the network node.

In this embodiment of this application, the network node may receive the global timeslot orchestration parameter sent by the controller, and store the global timeslot orchestration parameter. Then, the network node may adjust the local timeslot orchestration parameter based on the extracted first traffic feature data when the global timeslot orchestration parameter of the aggregated flow is met. In other words, the network node may perform adaptation of local timeslot orchestration, to adjust a transmission timeslot occupied percentage and a transmission timeslot occupied location of each data flow included in the plurality of aggregated flows.

It should be noted that, in this embodiment of this application, the controller aggregates and uniformly orchestrates the plurality of data flows with the same source and sink. Compared with a method in which the controller orchestrates each data flow, algorithm complexity can be reduced, and orchestration efficiency of the controller can be improved. Subsequently, the network node performs local timeslot orchestration on each data flow based on a traffic feature of each data flow, so that adaptation of local timeslot orchestration can be performed in a timely manner.

Optionally, if the variation between the first traffic feature data and the stored reference traffic feature data does not exceed the first threshold, the network node may determine the stored forwarding policy as the data forwarding policy. In other words, if the variation between the first traffic feature data and the reference traffic feature data does not exceed the first threshold, it indicates that the current traffic feature of the first data flow does not change obviously. Therefore, the network node may not need to adjust the data forwarding policy.

In this embodiment of this application, if the network node is the head node in the domain to which the network node belongs, after adjusting the local timeslot orchestration parameter, the network node may forward the first data packet based on an adjusted local timeslot orchestration parameter. In other words, each data packet included in the first data flow may be forwarded based on a transmission timeslot occupied percentage and a transmission timeslot occupied location of the first data flow in a local timeslot.

Optionally, if the network node does not need to adjust the local timeslot orchestration parameter, the network node may forward the first data packet based on the stored local timeslot orchestration parameter.

### Second implementation

In the second implementation, different from the first implementation, the network node may be any network node in the domain to which the network node belongs. That the network node updates a stored forwarding policy based on the first traffic feature data includes: The network node updates a traffic shaping parameter of the network node based on the first traffic feature data, where the traffic shaping parameter includes one or more of a CIR, a CBS, an EBS, a PIR, and a PBS. In other words, in the second implementation, the data forwarding policy includes the traffic shaping parameter.

In this embodiment of this application, after updating the traffic shaping parameter, the network node may forward the first data packet based on an updated traffic shaping parameter, that is, implement traffic shaping of the first data flow.

Optionally, if the network node does not need to adjust the traffic shaping parameter, the network node may forward the first data packet based on the stored traffic shaping parameter.

### Third implementation

In the second implementation, different from the first implementation, the network node may be any network node in the domain to which the network node belongs. That the network node updates a stored forwarding policy based on the first traffic feature data includes: The network node updates a stored load balancing policy based on the first traffic feature data, where the load balancing policy indicates a transmission path for transmitting the data packet included in the first data flow. In other words, in the third implementation, the data forwarding policy includes the load balancing policy.

In this embodiment of this application, after updating the load balancing policy, the network node may forward the first data packet based on the updated load balancing policy, that is, implement path planning of the data packet included in the first data flow.

Optionally, if the network node does not need to adjust the load balancing policy, the network node may forward the first data packet based on the stored traffic shaping parameter.

### Fourth implementation

In the fourth implementation, the network node may be any network node in the domain to which the network node belongs. The aggregated flow may be defined on the network node. The network node may determine traffic feature data of one aggregated flow based on traffic feature data of each data flow included in the aggregated flow.

An aggregation manner of the aggregated flow may be the same-source and same-sink aggregation manner determined by the controller in the first implementation, or any implementable aggregation manner defined in the network node. For example, a plurality of data flows from a same source address block and flowing to a same destination address block may be aggregated into one aggregated flow. In other words, the aggregated flow includes the plurality of data flows from the same head node to the same tail node in the domain, or the aggregated flow includes the plurality of data flows from the same source address block to the same destination address block in the domain.

In this embodiment of this application, after determining the traffic feature data of the aggregated flow, the network node may further determine the data forwarding policy of the aggregated flow. In other words, the network node may determine and store the overall data forwarding policy by using the aggregated flow as a whole. The data forwarding policy includes the policy used by the network node to forward the data packet included in the first data flow. In other words, the network node uses the data forwarding policy to forward the data packet included in the first data flow.

Optionally, that the network node determines the data forwarding policy based on the first traffic feature data includes: The network node determines first aggregated flow feature data based on the first traffic feature data, where the first aggregated flow feature data is traffic feature data of a first aggregated flow to which the first data flow belongs; and if a variation between the first aggregated flow feature data and stored reference aggregated flow feature data exceeds a second threshold, the network node updates a stored forwarding policy based on the first aggregated flow feature data to obtain the data forwarding policy.

It should be noted that the reference aggregated flow feature data stored in the network node may have two possibilities. In other words, the network node determines the reference aggregated flow feature data in two specific implementations. The following describes the two specific implementations.

### First specific implementation

The reference aggregated flow feature data may be the traffic feature data of the first aggregated flow determined based on the traffic feature data carried in the data packet that belongs to the first aggregated flow and that is received in a first interval.

In this embodiment of this application, the network node may determine the traffic feature data of the aggregated flow at intervals based on the traffic feature data carried in the data packet that belongs to the first aggregated flow and that is received in the interval, and store the traffic feature data. The first interval is an interval before an interval at which the network node receives the first data packet. The first data packet is a data packet received within an interval after the first interval. The first data flow to which the first data packet belongs belongs to the first aggregated flow.

### Second specific implementation

The reference aggregated flow feature data may be obtained by the network node by predicting traffic feature data of the first aggregated flow at a first moment. The first moment is a moment at which the first data packet is received.

In this embodiment of this application, the network node may predict the traffic feature data of the first aggregated flow at the first moment based on a traffic feature model of the first aggregated flow, to obtain the reference aggregated flow feature data, where the traffic feature model is used to describe a change of a traffic feature of the first aggregated flow. In other words, the network node may construct the traffic feature model of the first aggregated flow based on the traffic feature data carried in the previously received data packet included in each data flow of the first aggregated flow. Alternatively, the network node constructs the traffic feature model of each data flow, and then constructs the traffic feature model of the first aggregated flow based on the traffic feature model of each data flow. The network node may further predict traffic feature data of the first aggregated flow at a later moment based on the traffic feature model of the first aggregated flow, preplan a forwarding policy at the later moment, and store the preplanned forwarding policy.

Optionally, after receiving the first data packet, the network node may further update the traffic feature model of the first aggregated flow based on the first traffic feature data.

It may be learned that, in this embodiment of this application, the network node may also learn and predict the traffic feature of the aggregated flow and adjust the data forwarding policy corresponding to each aggregated flow based on the change of the traffic feature of each data flow.

In this embodiment of this application, the network node may compare the first aggregated flow feature data determined in real time with the stored reference aggregated flow feature data. If the variation between the first aggregated flow feature data and the reference aggregated flow feature data exceeds the second threshold, it indicates that a current traffic feature of the first aggregated flow obviously changes, and the stored forwarding policy may become invalid. Therefore, the data forwarding policy needs to be adjusted. In other words, the network node needs to update the stored forwarding policy.

It should be noted that, in this embodiment of this application, the data forwarding policy may include the local timeslot orchestration parameter, the traffic shaping parameter, or the load balancing policy. In other words, in this embodiment of this application, when the network node needs to adjust the data forwarding policy, the network node may update the local timeslot orchestration parameter, or update the traffic shaping parameter of the network node, or update the load balancing policy based on the first aggregated flow feature data. The traffic shaping parameter indicates a shaping parameter used when the data packet included in the first aggregated flow is transmitted. The load balancing policy indicates a transmission path for transmitting the data packet included in the first aggregated flow.

In addition, if the data forwarding policy may include the local timeslot orchestration parameter, the network node is the head node in the domain to which the network node belongs, the aggregated flow includes the plurality of data flows that flow from the same head node to the same tail node in the domain, the global timeslot orchestration parameter delivered by the controller may indicate transmission timeslot occupation of a plurality of combination flows, each combination flow includes a plurality of aggregated flows that flow from the network node to the same tail node in the domain, the local timeslot orchestration parameter indicates transmission timeslot occupation of each aggregated flow included in the plurality of combination flows when the global timeslot orchestration parameter is met.

In this embodiment of this application, the network node may use the aggregated flow as a whole to update the local timeslot orchestration parameter, or update the traffic shaping parameter of the network node, or update the load balancing policy. In other words, the network node may process one aggregated flow as a large data flow. For a specific implementation, refer to related descriptions in the foregoing several implementations. Details are not described herein again.

Optionally, if a variation between the first aggregated flow feature data and stored reference aggregated flow feature data does not exceed a second threshold, the network node determines a stored forwarding policy as the data forwarding policy. In other words, if the variation between the first aggregated flow feature data and the reference aggregated flow feature data does not exceed the second threshold, it indicates that the current traffic feature of the first aggregated flow does not change obviously, and the previously stored forwarding policy is valid. Therefore, the network node may not need to adjust the data forwarding policy.

In this embodiment of this application, after determining the data forwarding policy based on the traffic feature data carried in the first data packet, the network node may forward the first data packet based on the data forwarding policy.

It should be noted that, assuming that the network node updates the local timeslot orchestration parameter, the traffic shaping parameter, or the load balancing policy, for an implementation in which the network node forwards the first data packet, refer to related descriptions in the foregoing second and third implementations. Details are not described herein again. Different from the first to the third implementations, in the fourth implementation, the aggregated flow is equivalent to the data flow in the first to the third implementations, and the combination flow is equivalent to the aggregated flow in the first to the third implementations. In other words, in the fourth implementation, the network node makes a decision at a larger granularity, and the network node forwards the data packet based on the policy with a larger granularity.

According to a second aspect, a network node is provided. The network node has a function of implementing a behavior of the data packet forwarding method in the first aspect. The network node includes one or more modules. The one or more modules are configured to implement the data packet forwarding method provided in the first aspect.

In other words, the network node is provided. The network node includes:
a receiving module, configured to receive a first data packet, where the first data packet carries first traffic feature data, and the first traffic feature data is traffic feature data of a first data flow to which the first data packet belongs;
a determining module, configured to determine a data forwarding policy based on the first traffic feature data, where the data forwarding policy includes a policy used when the network node forwards a data packet included in the first data flow; and
a forwarding module, configured to forward the first data packet based on the data forwarding policy.

Optionally, the first traffic feature data is determined by an upstream device in a domain to which the network node belongs; or the first traffic feature data is determined by customer premises equipment.

Optionally, the first data packet is an IPv6 packet. The first traffic feature data is carried in an extension header of the first data packet. The extension header is a hop-by-hop options header, a destination options header, or a segment routing header.

Optionally, when the extension header is the segment routing header, the first traffic feature data is carried in a segment identifier SID field or a type-length-value TLV field of the segment routing header.

Optionally, the determining module includes:
a first updating unit, configured to: if a variation between the first traffic feature data and stored reference traffic feature data exceeds a first threshold, update a stored forwarding policy based on the first traffic feature data to obtain the data forwarding policy; and
a first determining unit, configured to: if a variation between the first traffic feature data and stored reference traffic feature data does not exceed a first threshold, determine a stored forwarding policy as the data forwarding policy.

Optionally, the network node is a head node in a domain to which the network node belongs.

The first updating unit includes:
an obtaining subunit, configured to obtain a global timeslot orchestration parameter, where the global timeslot orchestration parameter indicates transmission timeslot occupation of a plurality of aggregated flows, and each aggregated flow includes a plurality of data flows that flow from the network node to a same tail node in the domain; and
a first updating subunit, configured to update a stored local timeslot orchestration parameter based on the global timeslot orchestration parameter and the first traffic feature data, where the local timeslot orchestration parameter indicates transmission timeslot occupation of each data flow included in the plurality of aggregated flows when the global timeslot orchestration parameter is met.

Optionally, the transmission timeslot occupation includes at least one of a transmission timeslot occupied percentage and a transmission timeslot occupied location.

Optionally, the first updating unit includes:
a second updating subunit, configured to update a traffic shaping parameter of the network node based on the first traffic feature data, where the traffic shaping parameter includes one or more of a committed information rate CIR, a committed burst size CBS, an excess burst size EBS, a peak information rate PIR, or a peak burst size PBS.

Optionally, the updating unit includes:
a third updating subunit, configured to update a stored load balancing policy based on the first traffic feature data, where the load balancing policy indicates a transmission path for transmitting the data packet included in the first data flow.

Optionally, the reference traffic feature data is traffic feature data carried in a second data packet. The second data packet is a data packet received by the network node before the network node receives the first data packet. The second data packet belongs to the first data flow.

Optionally, the reference traffic feature data is obtained by the network node by predicting traffic feature data of the first data flow at a first moment. The first moment is a moment at which the first data packet is received.

Optionally, the network node further includes:
a prediction module, configured to predict the traffic feature data of the first data flow at the first moment based on a traffic feature model of the first data flow, to obtain the reference traffic feature data, where the traffic feature model is used to describe a change of a traffic feature of the first data flow.

Optionally, the network node further includes:
an updating module, configured to update the traffic feature model based on the first traffic feature data.

Optionally, the determining module includes:
a second determining unit, configured to determine first aggregated flow feature data based on the first traffic feature data, where the first aggregated flow feature data is traffic feature data of a first aggregated flow to which the first data flow belongs;
a second updating unit, configured to: if a variation between the first aggregated flow feature data and stored reference aggregated flow feature data exceeds a second threshold, update a stored forwarding policy based on the first aggregated flow feature data to obtain the data forwarding policy; and
a third determining unit, configured to: if a variation between the first aggregated flow feature data and stored reference aggregated flow feature data does not exceed a second threshold, determine a stored forwarding policy as the data forwarding policy.

Optionally, the first traffic feature data includes one or more of a flow rate, a bandwidth, traffic shaping feature data, traffic burst feature data, and traffic statistics feature data of the first data flow.

The traffic shaping feature data includes the traffic shaping parameter configured on a device that determines the traffic feature data of the first data flow. The traffic shaping parameter includes one or more of the CIR, the CBS, the EBS, the PIR, and the PBS.

The traffic burst feature data includes one or more of a burst size, burst duration, and a burst rate.

The traffic statistics feature data includes one or more of a maximum packet quantity per interval, a maximum payload size, an average packet quantity per interval, and an average payload size in a statistics interval.

According to a third aspect, a network node is provided. The network node includes a processor and a memory. The memory is configured to: store a program for performing the data packet forwarding method provided in the first aspect, and store related data used to implement the data packet forwarding method provided in the first aspect. The processor is configured to execute the program stored in the memory. The network node may further include a communication bus. The communication bus is configured to establish a connection between the processor and the memory.

According to a fourth aspect, a data packet forwarding system is provided. The system includes a communication device and a network node.

The communication device is configured to determine first traffic feature data and send a first data packet. The first data packet carries the first traffic feature data. The first traffic feature data is traffic feature data of a first data flow to which the first data packet belongs.

The network node is configured to implement the data packet forwarding method provided in the first aspect.

Optionally, the communication device is customer premises equipment, or the communication device is an upstream device in a domain to which the network node belongs.

According to a fifth aspect, a computer-readable storage medium is provided. The computer-readable storage medium stores instructions. When the instructions are run on a computer, the computer is enabled to perform the data packet forwarding method in the first aspect.

According to a sixth aspect, a computer program product including instructions is provided. When the instructions are run on a computer, the computer is enabled to perform the data packet forwarding method in the first aspect.

Technical effects achieved in the second aspect, the third aspect, the fourth aspect, the fifth aspect, and the sixth aspect are similar to those achieved by using corresponding technical means in the first aspect. Details are not described again herein.

The technical solutions provided in embodiments of this application can bring at least the following beneficial effects:

In embodiments of this application, the network node may receive the first data packet, where the first data packet carries the first traffic feature data of the first data flow to which the first data packet belongs. The network node may determine the data forwarding policy based on the first traffic feature data. Because the data forwarding policy includes the policy used when the network node forwards the data packet included in the first data flow, the network node may forward the data packet based on the data forwarding policy. It may be learned that, in this solution, there is no need for the controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner.

### BRIEF DESCRIPTION OF DRAWINGS

FIG. 1 is a diagram of a system architecture of a data packet forwarding method according to an embodiment of this application;
FIG. 2 is a flowchart of a data packet forwarding method according to an embodiment of this application;
FIG. 3 is a schematic diagram of a structure of a data packet carrying traffic feature data according to an embodiment of this application;
FIG. 4 is a flowchart of another data packet forwarding method according to an embodiment of this application;
FIG. 5 is a flowchart of still another data packet forwarding method according to an embodiment of this application;
FIG. 6 is a flowchart of still another data packet forwarding method according to an embodiment of this application;
FIG. 7 is a flowchart of still another data packet forwarding method according to an embodiment of this application;
FIG. 8 is a flowchart of still another data packet forwarding method according to an embodiment of this application;
FIG. 9 is a flowchart of still another data packet forwarding method according to an embodiment of this application;
FIG. 10 is a flowchart of still another data packet forwarding method according to an embodiment of this application;
FIG. 11 is a schematic diagram of a structure of a network node according to an embodiment of this application;
FIG. 12 is a schematic diagram of a structure of a network node according to an embodiment of this application;
FIG. 13 is a schematic diagram of a structure of another network node according to an embodiment of this application; and
FIG. 14 is a schematic diagram of a structure of still another network node according to an embodiment of this application.

### DESCRIPTION OF EMBODIMENTS

To make the objectives, technical solutions, and advantages of this application clearer, the following further describes the implementations of embodiments of this application in detail with reference to the accompanying drawings.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

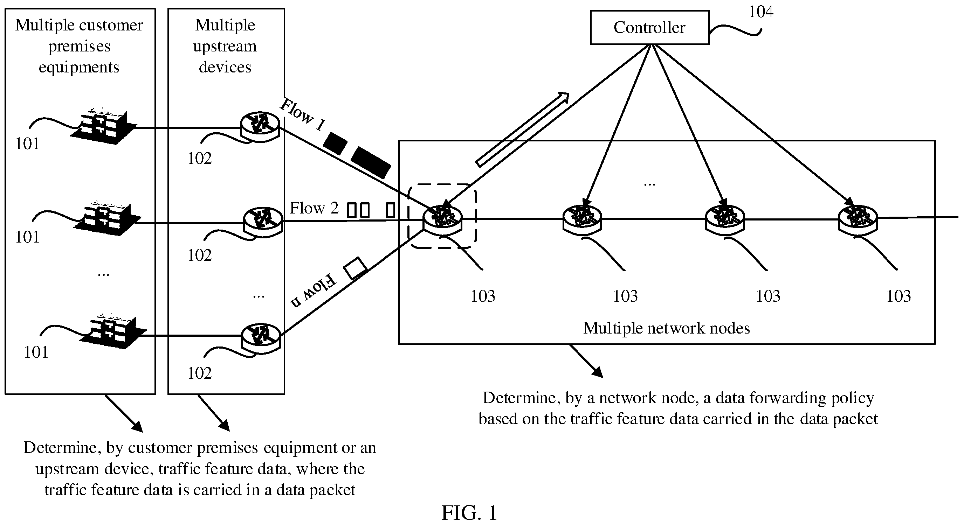

FIG. 1 is a diagram of a system architecture of a data packet forwarding method according to an embodiment of this application. As shown in FIG. 1, the system architecture includes a plurality of customer premises equipments 101, a plurality of upstream devices 102, and a plurality of network nodes 103. A data packet sent by one customer premises equipment 101 may be transmitted to one network node 103 through one upstream device 102, and the network node 103 forwards the data packet through routing. One upstream device 102 may receive data packets sent by some or all customer premises equipments 101. One network node 103 may receive data packets forwarded by some or all upstream devices 102.

The plurality of network nodes 103 may belong to a same domain, for example, a same deterministic networking (deterministic networking, DetNet) domain. The network node 103 in the domain may be configured to forward a data packet. The upstream device 102 may be any device that is outside the domain and that can transmit a data packet to the network node 103 in the domain. The network node in the domain may include a head node, an intermediate node, or a tail node.

In this embodiment of this application, the customer premises equipment 101 is configured to transmit a data packet to the upstream device 102, and then the upstream device 102 forwards the data packet to the network node 103.

It should be noted that, if the customer premises equipment 101 may directly obtain the traffic feature data of the data flow to which the sent data packet belongs, the customer premises equipment 101 may include the obtained traffic feature data in the data packet. For example, the customer premises equipment 101 is an operation server. The operation server may learn of a flow rate and a bandwidth of the data packet sent by the operation server. In this case, the operation server may include the obtained traffic feature data in the data packet.

If a measurement technology is deployed on the upstream device 102, traffic monitoring may be performed on a data packet flowing through the upstream device, and traffic feature data is extracted. In this case, the upstream device 102 may include the extracted traffic feature data in the data packet.

The network node 103 is configured to: after the data packet is received, determine a data forwarding policy based on the traffic feature data carried in the data packet, and forward the data packet based on the data forwarding policy. In other words, the network node may make a decision.

Optionally, the system architecture further includes a controller 104. The controller 104 may communicate with each network node 103. The controller 104 may be configured to perform global timeslot orchestration, that is, determine a global timeslot orchestration parameter, and deliver the global timeslot orchestration parameter to the head node in the domain. The head node is configured to determine a local timeslot orchestration parameter based on the traffic feature data and the global timeslot orchestration parameter, and forward the data packet based on the local timeslot orchestration parameter. In other words, the controller and the network node may be combined to make a decision.

It may be learned from the foregoing descriptions that, in this solution, the traffic feature data is directly obtained by the customer premises equipment 101 or extracted by the measurement technology deployed on the upstream device 102 with less traffic, instead of being extracted by a measurement technology deployed on the network node 103. This can relieve pressure on the network node 103 with more traffic, and improve processing efficiency of the network node 103. The network node 103 extracts, in real time, the traffic feature data carried in the data packet, and determines and uses the data forwarding policy in a timely manner. In this way, various traffic events in a network can be coped with in a more timely manner.

In this embodiment of this application, the customer premises equipment 101 may be a mobile phone, a computer, a server, or the like. The upstream device 102 may be a router, a switch, a bridge, or the like. The network node 103 may be any device having a forwarding function, such as a router or a switch. The controller 104 may be a computer, a server, or the like.

It may be learned from the foregoing descriptions that, in this embodiment of this application, the network node may make a decision, or the controller and the network node may be combined to make a decision. In other words, there are a plurality of implementations for determining the data forwarding policy in this embodiment of this application. The following describes these implementations in a plurality of embodiments. It should be noted that the following several implementations may be separately used or may be used in combination.

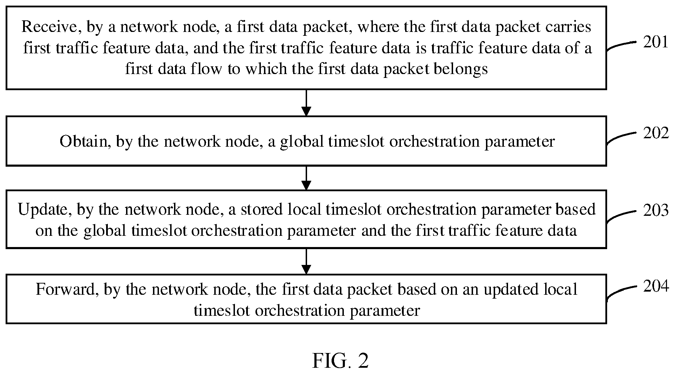

FIG. 2 is a flowchart of a data packet forwarding method according to an embodiment of this application. This embodiment of this application describes a first implementation of determining a data forwarding policy. In this embodiment of this application, the method is applied to a network node. The network node is a head node in a domain to which the network node belongs. As shown in FIG. 2, the method includes the following steps.

Step **201:** The network node receives a first data packet, where the first data packet carries first traffic feature data, and the first traffic feature data is traffic feature data of a first data flow to which the first data packet belongs.

In this embodiment of this application, it may be learned from the foregoing descriptions that the network node in the domain may receive a data packet transmitted by an upstream device. The following uses the first data packet as an example to describe the data packet forwarding method provided in this embodiment of this application.

In this embodiment of this application, the first data packet received by the network node carries the first traffic feature data, and the first traffic feature data is the traffic feature data of the first data flow to which the first data packet belongs.

Optionally, the first traffic feature data may be determined by the upstream device in the domain to which the network node belongs; or the first traffic feature data may be determined by customer premises equipment.

It should be noted that, if the customer premises equipment may directly obtain the first traffic feature data of the first data flow to which the sent first data packet belongs, the customer premises equipment may include the obtained first traffic feature data in the first data packet. For example, the customer premises equipment is an operation server. The operation server may send a data packet included in a data flow, based on a sending parameter set by the operation server, such as a sending interval (a flow rate) of the data packet and a bandwidth occupied by the data flow. In other words, the operation server may learn of the first traffic feature data such as a flow rate and a bandwidth of the first data flow to which the first data packet sent by the operation server belongs. In this case, the operation server may include the obtained first traffic feature data in the first data packet. For a specific including manner, refer to the following detailed descriptions.

If a measurement technology is deployed on the upstream device, traffic monitoring may be performed on a data flow to which a data packet received by the upstream device belongs, and traffic feature data is extracted. In this case, the upstream device may include, in the first data packet, the first traffic feature data extracted by monitoring the first data flow. For a specific including manner, refer to the following detailed descriptions. The measurement technology deployed on the upstream device may be a technology such as flow cache (flow cache) or sketch (sketch). A method for extracting traffic feature data may include flow counting, elephant and mice flow identification, and the like. The upstream device may monitor a data flow by using the deployed measurement technology, and extract traffic feature data of the data flow that flows through the upstream device, for example, monitoring an interval between two adjacent data packets belonging to a same data flow, a traffic volume and a payload size of each data packet, and total traffic, average packet traffic, and the like of all data packets that belong to a same data flow and that are received within a period of time.

Optionally, before the network node receives the first data packet, if any device, other than the customer premises equipment and the upstream device, for transmitting the first data packet may determine the first traffic feature data of the first data flow to which the first data packet belongs, the device includes the determined first traffic feature data in the first data packet, and transmits the first data packet to the network node.

It should be noted that, in this embodiment of this application, one or more fields may be defined in the data packet to carry the traffic feature data. For example, one or more fields may be defined based on a packet format designed in a protocol used for transmitting the data packet.

Optionally, the first data packet may be an IPv6 packet. The first traffic feature data may be carried in an extension header of the first data packet. The extension header may be a hop-by-hop options header (hop by hop options header, HbH Opt H), a destination options header (destination option header, Des Opt H), or a segment routing header (segment routing header, SRH). In other words, a field for carrying the traffic feature data may be defined in various extension headers.

When the extension header is the SRH, the first traffic feature data may be carried in a segment identifier SID field or a TLV field of the SRH.

It should be noted that the first traffic feature data includes a plurality of types of feature data. All the feature data may be carried in one extension header, or may be carried in a plurality of extension headers, and each extension header carries a part of feature data. Alternatively, when the first data packet is another protocol packet, a field for carrying the traffic feature data may be defined in a corresponding protocol.

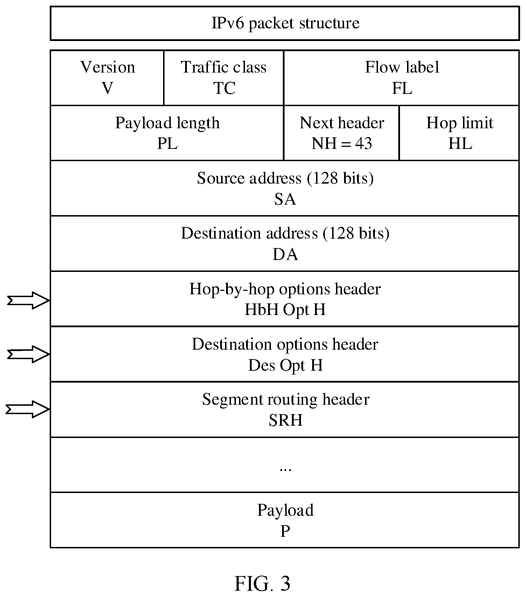

FIG. 3 shows a schematic diagram of a structure of an IPv6 packet. The structure of the IPv6 packet includes a version (version, V), a traffic class (traffic class, TC), a flow label (flow label, FL), a payload length (payload length, PL), a next header (next header, NH), a hop limit (hop limit, HL), a source address (source address, SA), a destination address (destination address, DA), a hop-by-hop options header (HbH Opt H), a destination options header (Des Opt H), a segment routing header (SRH), ..., and a payload (payload, P). The first traffic feature data may be carried in the HbH Opt H, or may be carried in the Des Opt H, or may be carried in the SRH.

Optionally, the first traffic feature data may include one or more of a flow rate, a bandwidth, traffic shaping feature data, traffic burst feature data, and traffic statistics feature data of the first data flow.

The traffic shaping feature data may include a traffic shaping parameter configured on a device that determines the traffic feature data of the first data flow. The traffic shaping parameter includes one or more of a CIR, a CBS, an EBS, a PIR, and a PBS.

It should be noted that the CIR, the CBS, the EBS, the PIR, and the PBS refer to parameters that are related to token bucket rate testing and that are configured on the device for determining the traffic feature data of the first data flow. Because the device shapes the first data flow, that is, forwards the data packet included in the data flow based on these parameters of token bucket rate testing, these parameters may describe the traffic feature of the first data flow to some extent.

The traffic burst feature data may include one or more of a burst size (burst size, unit: byte), burst duration (burst duration, unit: s), and a burst rate (burst rate, unit: 1/s).

The traffic statistics feature data may include one or more of a maximum packet quantity per interval (max-packets-per-interval), a maximum payload size (max-payload-size), an average packet quantity per interval (average-packets-per-interval), and an average payload size (average-payload-size) in a statistics interval (interval). The traffic statistics feature data may represent a traffic congestion status.

It should be noted that different devices may determine different types of traffic feature data, and this is related to the measurement technology deployed on the device. In addition, with transmission of the first data packet, a device through which the first data packet passes may include, in a corresponding field of the data packet, some feature data that can be determined by the device. In other words, a plurality of types of feature data included in the first traffic feature data may be determined by one or more devices.

Optionally, the device may determine the first traffic feature data at intervals, and include the determined first traffic feature data in one received data packet included in the first data flow. The interval may be greater than an interval between two adjacent data packets included in the first data flow. In other words, there is no need to carry the first traffic feature data in every data packet. Alternatively, the device may include the determined first traffic feature data in each carried data packet. In other words, within an interval, the device may include first traffic feature data determined in a last interval in a received data packet included in a first data flow in this interval.

In this embodiment of this application, after receiving the first data packet, the network node may extract the first traffic feature data, and determine the data forwarding policy based on the first traffic feature data. The data forwarding policy may include a policy used when the network node forwards the data packet included in the first data flow. In other words, in this solution, the network node may determine the data forwarding policy in a timely manner based on the traffic feature data, to perform traffic optimization and the like on the data flow.

Optionally, if a variation between the first traffic feature data and stored reference traffic feature data exceeds a first threshold, the network node may update a stored forwarding policy based on the first traffic feature data to obtain the data forwarding policy.

It should be noted that, in this embodiment of this application, the reference traffic feature data stored in the network node may be traffic feature data carried in a second data packet. The second data packet is a data packet received by the network node before the network node receives the first data packet. A data flow to which the second data packet belongs is also the first data flow. Alternatively, the reference traffic feature data stored in the network node may be obtained by the network node by predicting traffic feature data of the first data flow at a first moment. The first moment is a moment at which the first data packet is received. In other words, in this embodiment of this application, a method for obtaining the reference traffic feature data by the network node has two specific implementations. The following describes the two specific implementations.

### First specific implementation

The network node receives the second data packet before the first moment. The second data packet carries the reference traffic feature data. Both the second data packet and the first data packet received at the first moment belong to the first data flow. The network node may extract and store the reference traffic feature data.

In this embodiment of this application, the network node may compare the first traffic feature data extracted in real time with the previously extracted and stored reference traffic feature data. If the variation between the first traffic feature data and the reference traffic feature data exceeds the first threshold, it indicates that a current traffic feature of the first data flow obviously changes. Therefore, the data forwarding policy needs to be adjusted. In other words, the network node needs to update the stored forwarding policy.

### Second specific implementation

Before the first moment, the network node may predict the traffic feature data of the first data flow at the first moment based on a traffic feature model of the first data flow, to obtain the reference traffic feature data, where the traffic feature model is used to describe a change of a traffic feature of the first data flow. In other words, in this embodiment of this application, the network node may construct the traffic feature model based on traffic feature data carried in a previously received data packet included in the first data flow, and predict traffic feature data at a later moment based on the traffic feature model. The network node may further preplan a forwarding policy at a later moment based on the predicted traffic feature data, and store the preplanned forwarding policy.

Optionally, after receiving the first data packet, the network node may further update the traffic feature model based on the first traffic feature data. In other words, the network node may update the traffic feature model in real time.

In this embodiment of this application, the network node may compare the first traffic feature data extracted in real time with the stored and predicted reference traffic feature data. If the variation between the first traffic feature data and the reference traffic feature data exceeds the first threshold, it indicates that a current traffic feature of the first data flow obviously changes compared with a predicted traffic feature, and the previously predicted and stored forwarding policy may become invalid. Therefore, the data forwarding policy needs to be adjusted. In other words, the network node needs to update the stored forwarding policy.

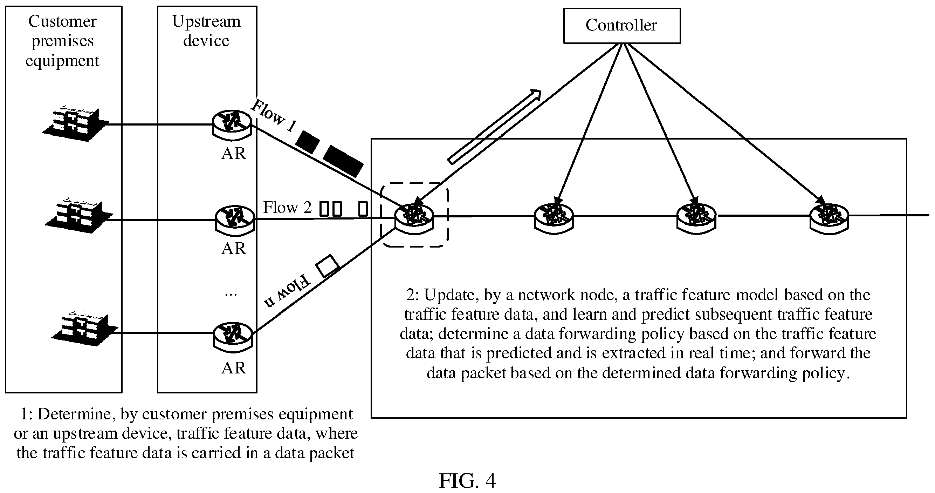

As shown in FIG. 4, in this embodiment of this application, customer premises equipment or an upstream device may determine traffic feature data, include the traffic feature data in a data packet, and forward the data packet to a network node in a domain. After receiving the data packet carrying the traffic feature data, any network node in the domain may construct and update a traffic feature model based on the traffic feature data, and learn and predict traffic feature data of a data flow based on the traffic feature model.

In the second specific implementation, the network node may learn the traffic feature of the data flow based on the traffic feature model, predict the traffic feature data of the data flow, and preplan the data forwarding policy based on the predicted traffic feature data. In other words, traffic planning may be implemented in advance. When receiving the data packet, the network node may determine the data forwarding policy based on the previously planned data forwarding policy and the traffic feature data carried in the data packet at the current moment. For example, if the traffic feature data carried in the data packet at the current moment is slightly different from the traffic feature data predicted during previous planning, the previously planned data forwarding policy may be directly used to forward the data packet. This can improve decision-making efficiency.

In this embodiment of this application, namely, in the first implementation of determining the data forwarding policy, the data forwarding policy may include a local timeslot orchestration parameter. In other words, in this embodiment of this application, the network node may update the stored local timeslot orchestration parameter based on the first traffic feature data. This is described in the following descriptions.

**Step 202:** The network node obtains a global timeslot orchestration parameter.

In this embodiment of this application, the network node may be the head node in the domain to which the network node belongs. The network node may obtain the global timeslot orchestration parameter. The global timeslot orchestration parameter may indicate transmission timeslot occupation of a plurality of aggregated flows. Each aggregated flow includes a plurality of data flows that flow from the network node to a same tail node in the domain.

The transmission timeslot occupation may include at least one of a transmission timeslot occupied percentage and a transmission timeslot occupied location.

In this embodiment of this application, the domain to which the network node belongs includes a plurality of network nodes. Some network nodes are head nodes, some network nodes are tail nodes, and some are intermediate nodes. A head node may be configured to receive a data packet transmitted by an upstream device, forward the data packet to a tail node through an intermediate node, and then forward the data packet to another device through the tail node.

The foregoing network node is the head node in the domain to which the network node belongs. The domain to which the network node belongs may correspond to one controller. The controller may be configured to perform global timeslot orchestration to aggregate the plurality of data flows with a same source and sink into one aggregated flow. In other words, the controller may determine the plurality of data flows that flow from the network node to the same tail node in the domain as one aggregated flow. In this way, a plurality of aggregated flows may be determined, and transmission timeslot occupation of the plurality of aggregated flows may be determined. In other words, a transmission timeslot occupied percentage and a transmission timeslot occupied location of each of the plurality of aggregated flows may be determined. The global timeslot orchestration parameter may indicate the transmission timeslot occupation of the plurality of aggregated flows. The controller may send the global timeslot orchestration parameter to the network node.

Optionally, the controller may periodically send the global timeslot orchestration parameter to the network node.

Step 203: The network node updates the stored local timeslot orchestration parameter based on the global timeslot orchestration parameter and the first traffic feature data.

In this embodiment of this application, the network node may update the stored local timeslot orchestration parameter based on the global timeslot orchestration parameter and the first traffic feature data. The local timeslot orchestration parameter may indicate transmission timeslot occupation of each data flow included in the plurality of aggregated flows when the global timeslot orchestration parameter is met.

In this embodiment of this application, the network node may receive the global timeslot orchestration parameter sent by the controller, and store the global timeslot orchestration parameter. Then, the network node may adjust the local timeslot orchestration parameter based on the extracted first traffic feature data when the global timeslot orchestration parameter of the aggregated flow is met. In other words, the network node may perform adaptation of local timeslot orchestration, to adjust a transmission timeslot occupied percentage and a transmission timeslot occupied location of each data flow included in the plurality of aggregated flows.

It should be noted that, in this embodiment of this application, the controller aggregates and uniformly orchestrates the plurality of data flows with the same source and sink. Compared with a method in which the controller orchestrates each data flow, algorithm complexity can be reduced, and orchestration efficiency of the controller can be improved. Subsequently, the network node performs local timeslot orchestration on each data flow based on a traffic feature of each data flow, so that adaptation of local timeslot orchestration can be performed in a timely manner.

The foregoing describes a case in which the network node needs to adjust the data forwarding policy. Optionally, if a variation between the first traffic feature data and stored reference traffic feature data does not exceed a first threshold, the network node may determine a stored forwarding policy as the data forwarding policy. In other words, if the variation between the first traffic feature data and the reference traffic feature data does not exceed the first threshold, it indicates that the current traffic feature of the first data flow does not change obviously. Therefore, the network node may not need to adjust the data forwarding policy.

In this embodiment of this application, after determining the data forwarding policy, the network node may forward the first data packet based on the data forwarding policy. In this embodiment of this application, because the data forwarding policy includes the local timeslot orchestration parameter, the network node may forward the first data packet in step 204.

Step 204: The network node forwards the first data packet based on an updated local timeslot orchestration parameter.

In this embodiment of this application, if the network node is the head node in the domain to which the network node belongs, after adjusting the local timeslot orchestration parameter, the network node may forward the first data packet based on an adjusted local timeslot orchestration parameter. In other words, each data packet included in the first data flow may be forwarded based on a transmission timeslot occupied percentage and a transmission timeslot occupied location of the first data flow in a local timeslot.

Optionally, if the network node does not need to adjust the local timeslot orchestration parameter, the network node may forward the first data packet based on the stored local timeslot orchestration parameter.

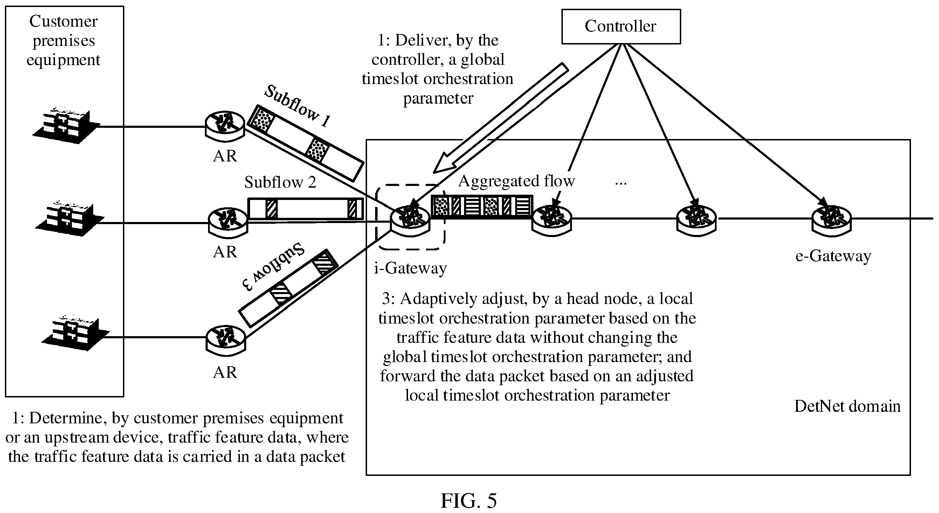

For example, as shown in FIG. 5, this embodiment of this application is described again by using a system architecture as an example. The system architecture includes three customer premises equipments, three upstream devices (AR), a plurality of network nodes (only some shown), and a controller. FIG. 5 shows only one head node i-Gateway, two intermediate nodes, and one tail node e-Gateway in the plurality of network nodes. It is assumed that a domain to which the plurality of network nodes belong is a DetNet domain (domain). One aggregated flow (aggregated flow) with a same source and sink refers to a plurality of data flows from a same i-Gateway to a same e-Gateway (it is assumed that each data flow is referred to as a subflow (Sub-flow) of the aggregated flow). It is assumed that the first traffic feature data is determined by the upstream devices AR in the domain to which the network nodes belong. The three upstream devices AR separately transmit data packets included in a data flow 1, a data flow 2, and a data flow 3 to the same i-Gateway. The i-Gateway forwards the data packets included in the three data flows to the same e-Gateway through the intermediate nodes. In this case, the data flow 1, the data flow 2, and the data flow 3 belong to one aggregated flow. The controller may determine transmission timeslot occupation of the aggregated flow, for example, a percentage and a location of a global timeslot occupied by the aggregated flow. The controller notifies the i-Gateway of the transmission timeslot occupation of the aggregated flow, that is, delivers the global timeslot orchestration parameter. The i-Gateway may perform local timeslot orchestration on the data flow 1, the data flow 2, and the data flow 3 based on respective traffic feature data of the data flow 1, the data flow 2, and the data flow 3 when the global timeslot orchestration parameter is met, that is, adaptively adjust the local timeslot orchestration parameter, for example, percentages and locations of a local timeslot occupied by the data flow 1, the data flow 2, and the data flow 3. Then, the i-Gateway may forward, based on the adjusted local timeslot orchestration parameter, the data packets included in the three data flows.

In conclusion, in this embodiment of this application, when the data forwarding policy includes the local timeslot orchestration parameter, the network node may receive the first data packet. The first data packet carries the first traffic feature data of the first data flow to which the first data packet belongs. The network node may adjust the local timeslot orchestration parameter based on the first traffic feature data when the global timeslot orchestration parameter is met, that is, adjust the data forwarding policy used when the network node forwards the data packet included in the first data flow. Then, the network node may forward the first data packet based on the adjusted local timeslot orchestration parameter. It may be learned that, in this solution, there is no need for the controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner.

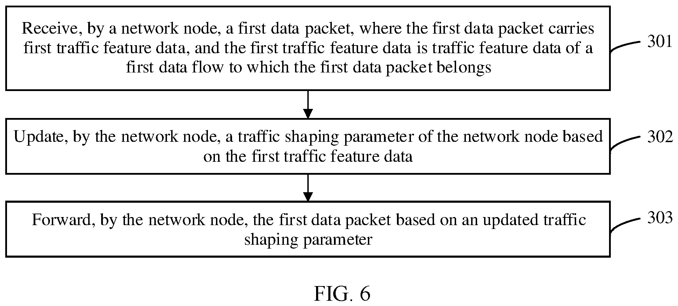

FIG. 6 is a flowchart of another data packet forwarding method according to an embodiment of this application. This embodiment of this application describes a second implementation of determining a data forwarding policy. In this embodiment of this application, the method is applied to any network node in a domain. As shown in FIG. 6, the method includes the following steps.

Step **301:** The network node receives a first data packet, where the first data packet carries first traffic feature data, and the first traffic feature data is traffic feature data of a first data flow to which the first data packet belongs.

In this embodiment of this application, when the network node is a head node in the domain to which the network node belongs, the network node may receive the first data packet transmitted by an upstream device; or when the network node is an intermediate node or a tail node in the domain to which the network node belongs, the network node may receive the first data packet forwarded by a previous-hop network node. The first data packet carries the first traffic feature data, and the first traffic feature data is the traffic feature data of the first data flow to which the first data packet belongs.

It should be noted that for descriptions of the first data packet and the first traffic feature data in step 301, refer to related content in step 201 in the foregoing embodiment. Details are not described herein again.

In this embodiment of this application, after receiving the first data packet, the network node may extract the first traffic feature data, and determine the data forwarding policy based on the first traffic feature data.

Optionally, if a variation between the first traffic feature data and stored reference traffic feature data exceeds a first threshold, the network node may update a stored forwarding policy based on the first traffic feature data to obtain the data forwarding policy.

It should be noted that, in this embodiment of this application, for related descriptions of the reference traffic feature data, refer to related descriptions of step 201 in the foregoing embodiment. Details are not described herein again.

In this embodiment of this application, the network node may compare the extracted first traffic feature data with the stored reference traffic feature data. If the variation between the first traffic feature data and the reference traffic feature data exceeds the first threshold, it indicates that a current traffic feature of the first data flow obviously changes. Therefore, the data forwarding policy needs to be adjusted. In other words, the network node needs to update the stored forwarding policy.

In this embodiment of this application, namely, in the second implementation of determining the data forwarding policy, the data forwarding policy may include a traffic shaping parameter. In other words, in this embodiment of this application, the network node may update the traffic shaping parameter of the network node based on the first traffic feature data. This is described in the following descriptions.

Step 302: The network node updates the traffic shaping parameter of the network node based on the first traffic feature data.

In this embodiment of this application, if the network node needs to adjust the data forwarding policy, the network node may update the traffic shaping parameter of the network node based on the first traffic feature data. The traffic shaping parameter includes one or more of a CIR, a CBS, an EBS, a PIR, and a PBS. In other words, the network node may adjust, based on the first traffic feature data, a parameter that is related to the token bucket rate testing and that is configured by the network node, to perform traffic shaping on the first data flow.

For example, the network node may flexibly adjust, based on bandwidths of different data flows, the parameter that is related to token bucket rate testing and that is configured by the network node. In this way, a forwarding rate and the like of a data packet included in the first data flow may be adjusted, and more users may access a network while quality of service is ensured.

The foregoing describes a case in which the network node needs to adjust the data forwarding policy. Optionally, if a variation between the first traffic feature data and stored reference traffic feature data does not exceed a first threshold, the network node may determine a stored forwarding policy as the data forwarding policy. In other words, if the variation between the first traffic feature data and the reference traffic feature data does not exceed the first threshold, it indicates that the current traffic feature of the first data flow does not change obviously. Therefore, the network node may not need to adjust the data forwarding policy.

In this embodiment of this application, after determining the data forwarding policy, the network node may forward the first data packet based on the data forwarding policy. In this embodiment of this application, because the data forwarding policy includes the traffic shaping parameter, the network node may forward the first data packet in step 303.

Step 303: The network node forwards the first data packet based on an updated traffic shaping parameter.

In this embodiment of this application, after updating the traffic shaping parameter, the network node may forward the first data packet based on the updated traffic shaping parameter, that is, implement traffic shaping of the first data flow.

Optionally, if the network node does not need to adjust the traffic shaping parameter, the network node may forward the first data packet based on the stored traffic shaping parameter.

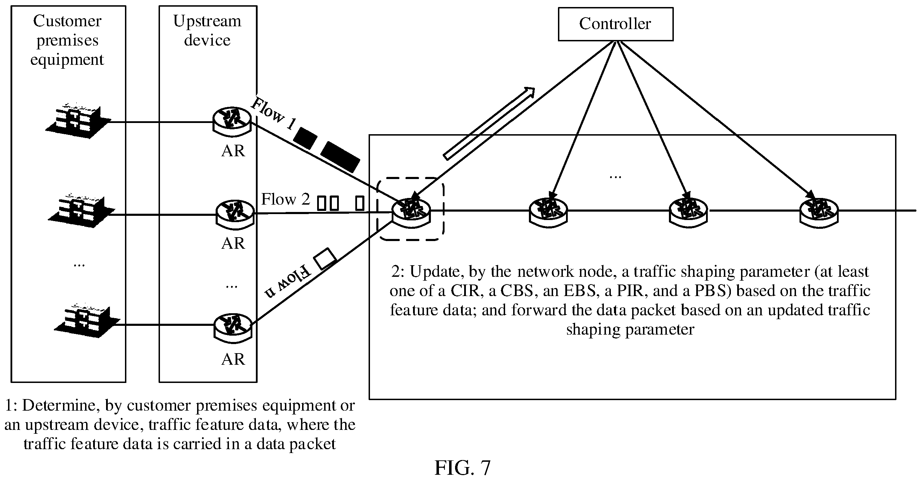

As shown in FIG. 7, in this embodiment of this application, customer premises equipment or an upstream device may determine traffic feature data, include the traffic feature data in a data packet, and forward the data packet to a network node in a domain. After receiving the data packet carrying the traffic feature data, any network node in the domain may adjust a traffic shaping parameter of the network node based on the traffic feature data. The traffic shaping parameter includes one or more of a CIR, a CBS, an EBS, a PIR, and a PBS. Then, the network node may forward the data packet based on an adjusted traffic shaping parameter.

In conclusion, in this embodiment of this application, when the data forwarding policy includes the traffic shaping parameter, the network node may receive the first data packet. The first data packet carries the first traffic feature data of the first data flow to which the first data packet belongs. The network node may adjust the traffic shaping parameter of the network node based on the first traffic feature data, that is, adjust the data forwarding policy used when the network node forwards the data packet included in the first data flow. Then, the network node may forward the first data packet based on the adjusted traffic shaping parameter. It may be learned that, in this solution, there is no need for a controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner.

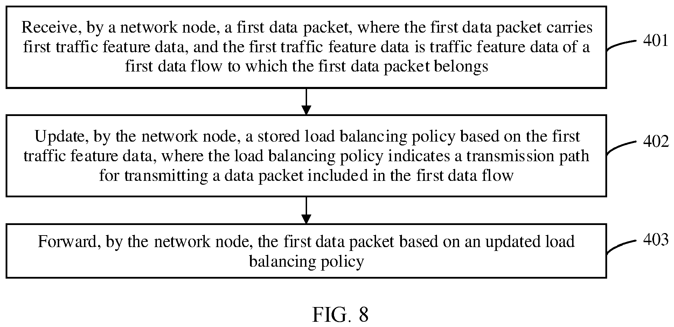

FIG. 8 is a flowchart of still another data packet forwarding method according to an embodiment of this application. This embodiment of this application describes a third implementation of determining a data forwarding policy. In this embodiment of this application, the method is applied to any network node in a domain. As shown in FIG. 8, the method includes the following steps.

Step **401:** The network node receives a first data packet, where the first data packet carries first traffic feature data, and the first traffic feature data is traffic feature data of a first data flow to which the first data packet belongs.

It should be noted that for descriptions of the first data packet and the first traffic feature data in step 401, refer to related content in step 301 in the foregoing embodiment. Details are not described herein again.

In this embodiment of this application, after receiving the first data packet, the network node may extract the first traffic feature data, and determine the data forwarding policy based on the first traffic feature data.

Optionally, if a variation between the first traffic feature data and stored reference traffic feature data exceeds a first threshold, the network node may update a stored forwarding policy based on the first traffic feature data to obtain the data forwarding policy.

It should be noted that, in this embodiment of this application, for related descriptions of the reference traffic feature data, refer to related descriptions of step 201 in the foregoing embodiment. Details are not described herein again.

In this embodiment of this application, the network node may compare the extracted first traffic feature data with the stored reference traffic feature data. If the variation between the first traffic feature data and the reference traffic feature data exceeds the first threshold, it indicates that a current traffic feature of the first data flow obviously changes. Therefore, the data forwarding policy needs to be adjusted. In other words, the network node needs to update the stored forwarding policy.

In this embodiment of this application, namely, in the third implementation of determining the data forwarding policy, the data forwarding policy may include a load balancing policy. In other words, in this embodiment of this application, the network node may update a stored load balancing policy based on the first traffic feature data. This is described in the following descriptions.

Step 402: The network node updates the stored load balancing policy based on the first traffic feature data, where the load balancing policy indicates a transmission path for transmitting a data packet included in the first data flow.

In this embodiment of this application, if the network node needs to adjust the data forwarding policy, the network node may update the stored load balancing policy based on the first traffic feature data.

It should be noted that the load balancing policy may indicate the transmission path of each data packet included in the first data flow, and may refer to next-hop routing. For example, the load balancing policy indicates that some data packets included in the first data flow are routed to a network node A, and the other data packets are routed to a network node B.

**Step 403:** The network node forwards the first data packet based on an updated load balancing policy.

In this embodiment of this application, after updating the load balancing policy, the network node may forward the first data packet based on the updated load balancing policy, that is, implement path planning of the data packet included in the first data flow.

For example, it is assumed that the network node A previously forwards all the data packets included in the first data flow to the next-hop network node B through routing, and the current first data flow has a high flow rate and large traffic, and is an elephant flow. In this case, the network node may forward some data packets included in the first data flow to the network node B, and forward the other data packets to a network node C.

It may be learned from the foregoing descriptions that, in this embodiment of this application, the network node may implement load sharing on the elephant flow based on traffic features of different data flows.

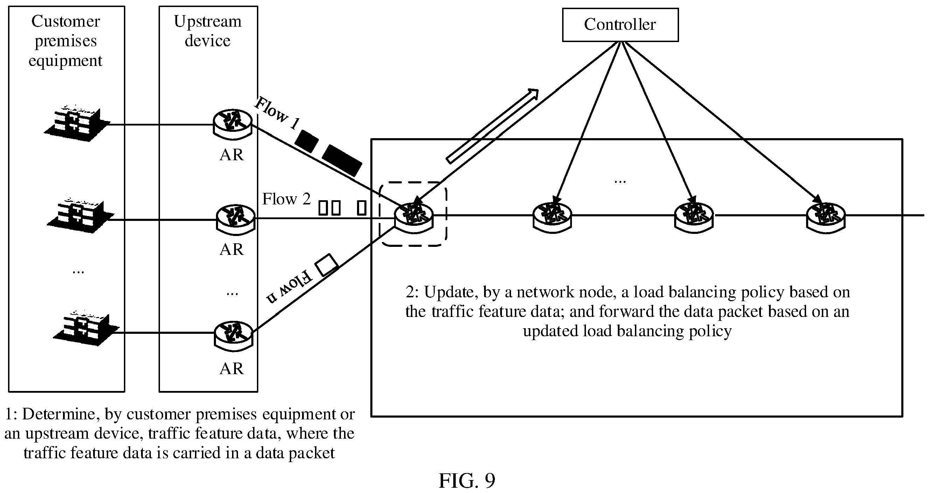

As shown in FIG. 9, in this embodiment of this application, customer premises equipment or an upstream device may determine traffic feature data, include the traffic feature data in a data packet, and forward the data packet to a network node in a domain. After receiving the data packet carrying the traffic feature data, any network node in the domain may adjust a load balancing policy based on the traffic feature data. Then, the network node may forward the data packet based on an adjusted load balancing policy.

Optionally, if the network node does not need to adjust the load balancing policy, the network node may forward the first data packet based on the stored traffic shaping parameter.

In conclusion, in this embodiment of this application, when the data forwarding policy includes the load balancing policy, the network node may receive the first data packet. The first data packet carries the first traffic feature data of the first data flow to which the first data packet belongs. The network node may adjust the load balancing policy of the network node based on the first traffic feature data, that is, adjust the data forwarding policy used when the network node forwards the data packet included in the first data flow. Then, the network node may forward the first data packet based on the adjusted load balancing policy. It may be learned that, in this solution, there is no need for a controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner.

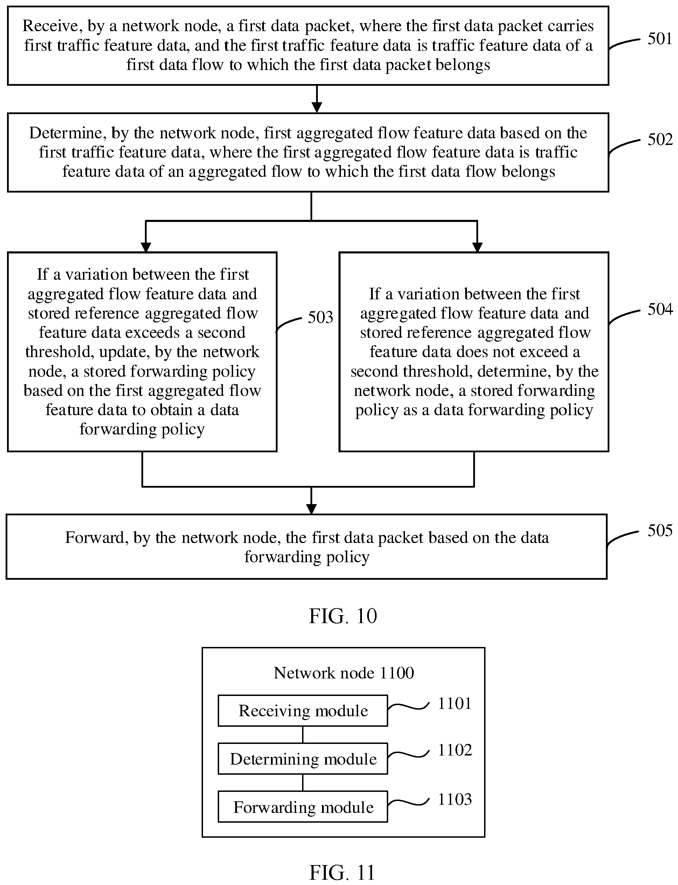

FIG. 10 is a flowchart of still another data packet forwarding method according to an embodiment of this application. This embodiment of this application describes a fourth implementation of determining a data forwarding policy. In this embodiment of this application, the method may be applied to any network node in a domain. As shown in FIG. 10, the method includes the following steps.

Step **501:** The network node receives a first data packet, where the first data packet carries first traffic feature data, and the first traffic feature data is traffic feature data of a first data flow to which the first data packet belongs.

It should be noted that for descriptions of the first data packet and the first traffic feature data in step 501, refer to related content in step 401 in the foregoing embodiment. Details are not described herein again.

Step 502: The network node determines first aggregated flow feature data based on the first traffic feature data, where the first aggregated flow feature data is traffic feature data of a first aggregated flow to which the first data flow belongs.

In the fourth implementation, the aggregated flow may be defined on the network node. The network node may determine traffic feature data of one aggregated flow based on traffic feature data of each data flow included in the aggregated flow. For example, a maximum packet size and an average packet size of data packets that are included in the aggregated flow and that are received in a period of time are obtained through statistics.

An aggregation manner of the aggregated flow may be the same-source and same-sink aggregation manner determined by the controller in the foregoing embodiment, or any implementable aggregation manner defined in the network node. For example, a plurality of data flows from a same source address block and flowing to a same destination address block may be aggregated into one aggregated flow. In other words, the aggregated flow may include the plurality of data flows from the same head node to the same tail node in the domain, or the aggregated flow may include the plurality of data flows from the same source address block to the same destination address block in the domain.

In this embodiment of this application, after receiving the first data packet, the network node may extract the first traffic feature data, and determine, based on the first traffic feature data, aggregated flow feature data of the first aggregated flow to which the first data flow belongs, that is, determine the first aggregated flow feature data. Then, the network node may determine the data forwarding policy based on the first aggregated flow feature data. The determined data forwarding policy includes a policy used by the network node to forward each data packet included in one aggregated flow. In this way, the data forwarding policy also includes a policy used by the network node to forward a data packet included in the first data flow.

It should be noted that the network node may determine and store the overall data forwarding policy by using the aggregated flow as a whole. The data forwarding policy includes the policy used by the network node to forward the data packet included in the first data flow. In other words, the network node uses the data forwarding policy to forward the data packet included in the first data flow.

**Step 503:** If a variation between the first aggregated flow feature data and stored reference aggregated flow feature data exceeds a second threshold, the network node updates a stored forwarding policy based on the first aggregated flow feature data to obtain the data forwarding policy.

In this embodiment of this application, if the variation between the first aggregated flow feature data and the stored reference aggregated flow feature data exceeds the second threshold, it indicates that a traffic feature of the first aggregated flow obviously changes, and the stored forwarding policy may become invalid. Therefore, the data forwarding policy needs to be adjusted. In other words, the network node needs to update the stored forwarding policy to obtain the data forwarding policy.

It should be noted that the reference aggregated flow feature data stored in the network node may have two possibilities. In other words, the network node determines the reference aggregated flow feature data in two specific implementations. The following describes the two specific implementations.

### First specific implementation

The reference aggregated flow feature data may be the traffic feature data of the first aggregated flow determined based on the traffic feature data carried in the data packet that belongs to the first aggregated flow and that is received in a first interval.

In this embodiment of this application, the network node may determine the traffic feature data of the first aggregated flow at intervals based on the traffic feature data carried in the data packet that belongs to the first aggregated flow and that is received in the interval, and store the traffic feature data. The first interval is an interval before an interval at which the network node receives the first data packet. The first data packet is a data packet received within an interval after the first interval. The first data flow to which the first data packet belongs belongs to the first aggregated flow.

### Second specific implementation

The reference aggregated flow feature data may be obtained by the network node by predicting traffic feature data of the first aggregated flow at a first moment. The first moment is a moment at which the first data packet is received.

In this embodiment of this application, the network node may predict the traffic feature data of the first aggregated flow at the first moment based on a traffic feature model of the first aggregated flow, to obtain the reference aggregated flow feature data, where the traffic feature model is used to describe a change of a traffic feature of the first aggregated flow. In other words, the network node may construct the traffic feature model of the first aggregated flow based on the traffic feature data carried in the previously received data packet included in each data flow of the first aggregated flow. Alternatively, the network node constructs the traffic feature model of each data flow, and then constructs the traffic feature model of the first aggregated flow based on the traffic feature model of each data flow. The network node may further predict traffic feature data of the first aggregated flow at a later moment based on the traffic feature model of the first aggregated flow, preplan a forwarding policy at the later moment, and store the preplanned forwarding policy.

Optionally, after receiving the first data packet, the network node may further update the traffic feature model of the first aggregated flow based on the first traffic feature data.

It may be learned that, in this embodiment of this application, the network node may also learn and predict the traffic feature of the aggregated flow and adjust the data forwarding policy corresponding to each aggregated flow based on the change of the traffic feature of each data flow.

In this embodiment of this application, the network node may compare the first aggregated flow feature data determined in real time with the stored reference aggregated flow feature data. If the variation between the first aggregated flow feature data and the reference aggregated flow feature data exceeds the second threshold, it indicates that a current traffic feature of the first aggregated flow obviously changes, and the stored forwarding policy may become invalid. Therefore, the data forwarding policy needs to be adjusted. In other words, the network node needs to update the stored forwarding policy.

It should be noted that, in this embodiment of this application, the data forwarding policy may include a local timeslot orchestration parameter, a traffic shaping parameter, or a load balancing policy. In other words, in this embodiment of this application, when the network node needs to adjust the data forwarding policy, the network node may update the local timeslot orchestration parameter, or update the traffic shaping parameter of the network node, or update the load balancing policy based on the first aggregated flow feature data. The traffic shaping parameter indicates a shaping parameter used when the data packet included in the first aggregated flow is transmitted. The load balancing policy indicates a transmission path for transmitting the data packet included in the first aggregated flow.

In addition, if the data forwarding policy includes the local timeslot orchestration parameter, the network node is the head node in the domain to which the network node belongs, the aggregated flow includes the plurality of data flows that flow from the same head node to the same tail node in the domain, the global timeslot orchestration parameter delivered by the controller indicates transmission timeslot occupation of a plurality of combination flows, each combination flow includes a plurality of aggregated flows that flow from the network node to the same tail node in the domain, the local timeslot orchestration parameter indicates transmission timeslot occupation of each aggregated flow included in the plurality of combination flows when the global timeslot orchestration parameter is met.

In this embodiment of this application, the network node may use the aggregated flow as a whole to update the local timeslot orchestration parameter, or update the traffic shaping parameter of the network node, or update the load balancing policy. In other words, the network node may process one aggregated flow as a large data flow. For a specific implementation, refer to related descriptions in the foregoing embodiment. Details are not described herein again.

Step 504: If a variation between the first aggregated flow feature data and stored reference aggregated flow feature data does not exceed a second threshold, the network node determines a stored forwarding policy as the data forwarding policy.

In this embodiment of this application, if the variation between the first aggregated flow feature data and the reference aggregated flow feature data does not exceed the second threshold, it indicates that the current traffic feature of the first aggregated flow does not change obviously, and the previously stored forwarding policy is valid. Therefore, the network node may not need to adjust the data forwarding policy.

In the second specific implementation of the reference aggregated flow feature data in step 503, the network node may learn the traffic feature of the aggregated flow based on the traffic feature model, predict the traffic feature data of the aggregated flow, and preplan the data forwarding policy based on the predicted traffic feature data. In other words, traffic planning may be implemented in advance. When the data packet is received, if the traffic feature data of the aggregated flow determined based on the traffic feature data carried in the data packet is slightly different from the traffic feature data of the aggregated flow predicted during previous planning, the previously planned data forwarding policy may be directly used to forward the data packet. This can improve decision-making efficiency.

Step 505: The network node forwards the first data packet based on the data forwarding policy.

In this embodiment of this application, after determining the data forwarding policy based on the first aggregated flow feature data, the network node may forward the first data packet based on the data forwarding policy.

It should be noted that, assuming that the network node updates the local timeslot orchestration parameter, the traffic shaping parameter, or the load balancing policy, for an implementation in which the network node forwards the first data packet, refer to related descriptions in the foregoing embodiment. Details are not described herein again. Different from the first to the third implementations, in the fourth implementation, the aggregated flow is equivalent to the data flow in the first to the third implementations, and the combination flow is equivalent to the aggregated flow in the first to the third implementations. In other words, in the fourth implementation, the network node makes a decision at a larger granularity, and the network node forwards the data packet based on the policy with a larger granularity.

For example, in the fourth implementation, the traffic shaping parameter is used to shape the aggregated flow, so that when the network node forwards the data packet included in the aggregated flow based on the traffic shaping parameter, the aggregated flow is shaped based on the traffic shaping parameter.

In addition, it should be noted that the data forwarding policy of the aggregated flow in this embodiment of this application may alternatively be different from the data forwarding policy of the data flow in the foregoing embodiment. In other words, for the aggregated flow, the data forwarding policy may further include a policy other than the foregoing strategies.

In addition, the specific implementations of the data forwarding policy of the aggregated flow described above may be used separately or in combination. For example, the network node may update only the traffic shaping parameter, or the network node may update both the traffic shaping parameter and the load balancing policy.

In conclusion, in this embodiment of this application, the network node may receive the first data packet, where the first data packet carries the first traffic feature data of the first data flow to which the first data packet belongs. The network node may determine the data forwarding policy of the first aggregated flow based on the first traffic feature data. The data forwarding policy includes the policy used when the network node forwards the data packet included in the first data flow. It may be learned that the network node aggregates the data flows into an aggregated flow for processing. In other words, the decision granularity is increased. This can relieve pressure on the network node. In addition, in this solution, there is no need for the controller to determine the forwarding policy and the network node to execute the forwarding policy. Instead, the network node senses the traffic feature of the data flow in real time, to adjust the data forwarding policy. In other words, in this solution, real-time performance of determining the data forwarding policy is high, and an emergency in a network can be better coped with in a timely manner.

FIG. 11 is a schematic diagram of a structure of a network node 1100 according to an embodiment of this application. The network node 1100 may be implemented as a part or all of network nodes by using software, hardware, or a combination thereof. The network node may be the network node shown in embodiments in FIG. 1 to FIG. 10. As shown in FIG. 11, the network node 1100 includes a receiving module 1101, a determining module 1102, and a forwarding module 1103.

The receiving module 1101 is configured to receive a first data packet, where the first data packet carries first traffic feature data, and the first traffic feature data is traffic feature data of a first data flow to which the first data packet belongs. For a specific implementation, refer to detailed descriptions of step 201, step 301, step 401, and step 501 in embodiments shown in FIG. 2, FIG. 6, FIG. 8, and FIG. 10, and related descriptions in embodiments shown in FIG. 3, FIG. 4, FIG. 5, FIG. 7, and FIG. 9. Details are not described herein again.

The determining module 1102 is configured to determine a data forwarding policy based on the first traffic feature data, where the data forwarding policy includes a policy used when the network node forwards a data packet included in the first data flow. For a specific implementation, refer to detailed descriptions of steps 201 and 202, steps 301 and 302, steps 401 and 402, and steps 501 and 502 in embodiments shown in FIG. 2, FIG. 6, FIG. 8, and FIG. 10, and related descriptions in embodiments shown in FIG. 3, FIG. 4, FIG. 5, FIG. 7, and FIG. 9. Details are not described herein again.

The forwarding module 1103 is configured to forward the first data packet based on the data forwarding policy. For a specific implementation, refer to detailed descriptions of step 203, step 303, step 403, and step 503 in embodiments shown in FIG. 2, FIG. 6, FIG. 8, and FIG. 10, and related descriptions in embodiments shown in FIG. 3, FIG. 4, FIG. 5, FIG. 7, and FIG. 9. Details are not described herein again.

Optionally, the first traffic feature data is determined by an upstream device in a domain to which the network node belongs; or the first traffic feature data is determined by customer premises equipment. For a specific implementation, refer to related descriptions in step 201 in the embodiment shown in FIG. 2. Details are not described herein again.

Optionally, the first data packet is an IPv6 packet. The first traffic feature data is carried in an extension header of the first data packet. The extension header is a hop-by-hop options header, a destination options header, or a segment routing header.

Optionally, when the extension header is the segment routing header, the first traffic feature data is carried in a segment identifier SID field or a type-length-value TLV field of the segment routing header.

Optionally, the determining module 1102 includes:
a first updating unit, configured to: if a variation between the first traffic feature data and stored reference traffic feature data exceeds a first threshold, update a stored forwarding policy based on the first traffic feature data to obtain the data forwarding policy, where for a specific implementation, refer to detailed descriptions of steps 201 and 202, steps 301 and 302, steps 401 and 402, and steps 501 and 502 in embodiments shown in FIG. 2, FIG. 6, FIG. 8, and FIG. 10, and related descriptions in embodiments shown in FIG. 3, FIG. 4, FIG. 5, FIG. 7, and FIG. 9, and details are not described herein again; and
a first determining unit, configured to: if a variation between the first traffic feature data and stored reference traffic feature data does not exceed a first threshold, determine a stored forwarding policy as the data forwarding policy.

Optionally, the network node is a head node in the domain to which the network node belongs.

The first updating unit includes:
an obtaining subunit, configured to obtain a global timeslot orchestration parameter, where the global timeslot orchestration parameter indicates transmission timeslot occupation of a plurality of aggregated flows, and each aggregated flow includes a plurality of data flows that flow from the network node to a same tail node in the domain; and
a first updating subunit, configured to update a stored local timeslot orchestration parameter based on the global timeslot orchestration parameter and the first traffic feature data, where the local timeslot orchestration parameter indicates transmission timeslot occupation of each data flow included in the plurality of aggregated flows when the global timeslot orchestration parameter is met. For a specific implementation, refer to related descriptions in embodiments shown in FIG. 2 and FIG. 5. Details are not described herein again.

Optionally, the transmission timeslot occupation includes at least one of a transmission timeslot occupied percentage and a transmission timeslot occupied location.

Optionally, the first updating unit includes:
a second updating subunit, configured to update a traffic shaping parameter of the network node based on the first traffic feature data, where the traffic shaping parameter includes one or more of a committed information rate CIR, a committed burst size CBS, an excess burst size EBS, a peak information rate PIR, or a peak burst size PBS. For a specific implementation, refer to related descriptions in embodiments shown in FIG. 6 and FIG. 7. Details are not described herein again.

Optionally, the first updating unit includes:
a third updating subunit, configured to update a stored load balancing policy based on the first traffic feature data, where the load balancing policy indicates a transmission path for transmitting the data packet included in the first data flow. For a specific implementation, refer to related descriptions in embodiments shown in FIG. 8 and FIG. 9. Details are not described herein again.

Optionally, the reference traffic feature data is traffic feature data carried in a second data packet. The second data packet is a data packet received by the network node before the network node receives the first data packet. The second data packet belongs to the first data flow.

Optionally, the reference traffic feature data is obtained by the network node by predicting traffic feature data of the first data flow at a first moment. The first moment is a moment at which the first data packet is received.

Optionally, the network node 1100 further includes:
a prediction module, configured to predict the traffic feature data of the first data flow at the first moment based on a traffic feature model of the first data flow, to obtain the reference traffic feature data, where the traffic feature model is used to describe a change of a traffic feature of the first data flow. For a specific implementation, refer to related descriptions in step 201 in the embodiment shown in FIG. 2. Details are not described herein again.

Optionally, the network node 1100 further includes:
an updating module, configured to update the traffic feature model based on the first traffic feature data.

Optionally, the determining module 1102 includes:
a second determining unit, configured to determine first aggregated flow feature data based on the first traffic feature data, where the first aggregated flow feature data is traffic feature data of a first aggregated flow to which the first data flow belongs;
a second updating unit, configured to: if a variation between the first aggregated flow feature data and stored reference aggregated flow feature data exceeds a second threshold, update a stored forwarding policy based on the first aggregated flow feature data to obtain the data forwarding policy, where for a specific implementation, refer to related descriptions in step 501 in the embodiment shown in FIG. 10, and details are not described herein again; and
a third determining unit, configured to: if a variation between the first aggregated flow feature data and stored reference aggregated flow feature data does not exceed a second threshold, determine a stored forwarding policy as the data forwarding policy.

Optionally, the first traffic feature data includes one or more of a flow rate, a bandwidth, traffic shaping feature data, traffic burst feature data, and traffic statistics feature data of the first data flow.

The traffic shaping feature data includes the traffic shaping parameter configured on a device that determines the traffic feature data of the first data flow. The traffic shaping parameter includes one or more of the CIR, the CBS, the EBS, the PIR, and the PBS.

The traffic burst feature data includes one or more of a burst size, burst duration, and a burst rate.

The traffic statistics feature data includes one or more of a maximum packet quantity per interval, a maximum payload size, an average packet quantity per interval, and an average payload size in a statistics interval.

In this embodiment of this application, the network node may receive the first data packet, where the first data packet carries the first traffic feature data of the first data flow to which the first data packet belongs. The network node may determine the data forwarding policy based on the first traffic feature data. Because the data forwarding policy includes the policy used when the network node forwards the data packet included in the first data flow, the network node may forward the data packet based on the data forwarding policy. It may be learned that, in this solution, there is no need for the controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner.

It should be noted that, when the network node provided in the foregoing embodiment forwards the data packet, division of the foregoing functional modules is merely used as an example for description. In actual application, the foregoing functions may be allocated to different functional modules for implementation based on a requirement. In other words, an internal structure of the network node is divided into different functional modules, to implement all or some of the functions described above. In addition, the network node provided in the foregoing embodiments pertains to a same concept as the embodiment of the data packet forwarding method. For a specific implementation process of the network node, refer to the method embodiment. Details are not described herein.

An embodiment of this application provides a data packet forwarding system. The system includes a communication device and a network node.

The communication device is configured to determine first traffic feature data and send a first data packet. The first data packet carries the first traffic feature data. The first traffic feature data is traffic feature data of a first data flow to which the first data packet belongs.

The network node is configured to receive the first data packet, determine a data forwarding policy based on the first traffic feature data, and forward the first data packet based on the data forwarding policy. The data forwarding policy includes a policy used when the network node forwards a data packet included in the first data flow.

Optionally, the communication device is customer premises equipment, or the communication device is an upstream device in a domain to which the network node belongs.

Optionally, the network node in the system may be the network node in embodiments shown in FIG. 1 to FIG. 10, and the network node has a function of implementing the data packet forwarding method provided in embodiments of this application.

In this embodiment of this application, the network node may receive the first data packet, where the first data packet carries the first traffic feature data of the first data flow to which the first data packet belongs. The network node may determine the data forwarding policy based on the first traffic feature data. Because the data forwarding policy includes the policy used when the network node forwards the data packet included in the first data flow, the network node may forward the data packet based on the data forwarding policy. It may be learned that, in this solution, there is no need for the controller to determine the forwarding policy and the network node to execute the forwarding policy. Instead, the network node may learn of the traffic feature data of the transmitted data flow in real time, and determine and use the data forwarding policy in a timely manner. In other words, in this solution, real-time performance of determining the data forwarding policy is high, and an emergency in a network can be better coped with in a timely manner. In addition, the first traffic feature data is determined by the communication device instead of the network node. This can relieve pressure on the network node, and further improve decision-making efficiency.

It should be noted that the system provided in the foregoing embodiments pertains to a same concept as the embodiment of the data packet forwarding method. For a specific implementation process of the system, refer to the method embodiment. Details are not described herein.

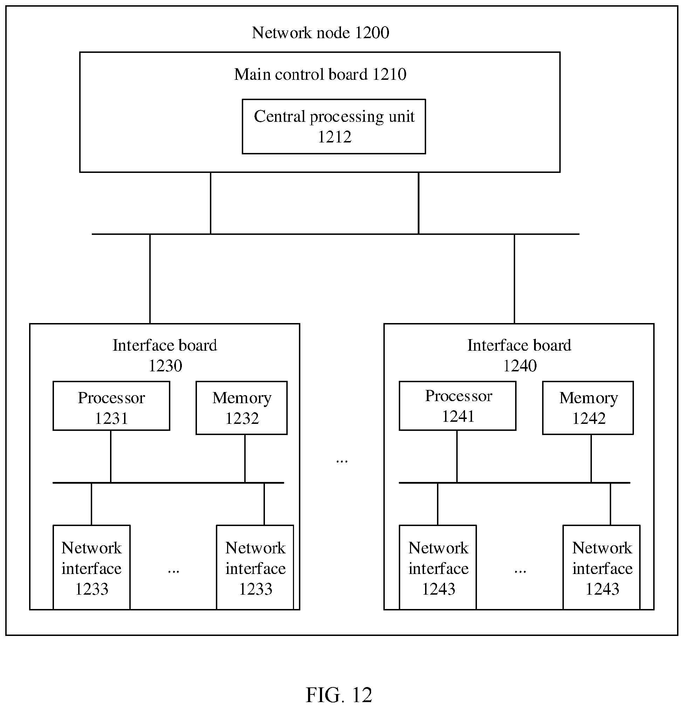

FIG. 12 is a schematic diagram of a structure of a network node according to an embodiment of this application. The network node may be the network node in any one of the foregoing embodiments. The network node 1200 may be a switch, a router, or another network node that forwards a packet. In this embodiment, the network node 1200 includes a main control board 1210, an interface board 1230, and an interface board 1240. When there are a plurality of interface boards, a switching board (not shown in the figure) may be included. The switching board is configured to complete data exchange between interface boards (the interface board is also referred to as a line card or a service board).

The main control board 1210 is configured to complete functions such as system management, device maintenance, and protocol processing. The interface boards 1230 and 1240 are configured to: provide various service interfaces (such as a POS interface, a GE interface, and an ATM interface), and forward a data flow. The main control board 1210 mainly includes three types of functional units: a system management and control unit, a system clock unit, and a system maintenance unit. The main control board 1210, the interface board 1230, and the interface board 1240 are connected to a platform backboard through a system bus to implement interworking. The interface board 1230 includes one or more processors 1231. The processor 1231 is configured to: control and manage the interface board, communicate with a central processing unit on the main control board, and forward a data flow. A memory 1232 on the interface board 1230 is configured to store a forwarding entry, and the processor 1231 forwards a data flow by searching the forwarding entry stored in the memory 1232.

The interface board 1230 includes one or more network interfaces 1233, configured to receive a data flow or other information sent by a terminal or another network device, and process the data flow or the data based on instructions of the processor 1231. Specific implementation processes are not described herein again.

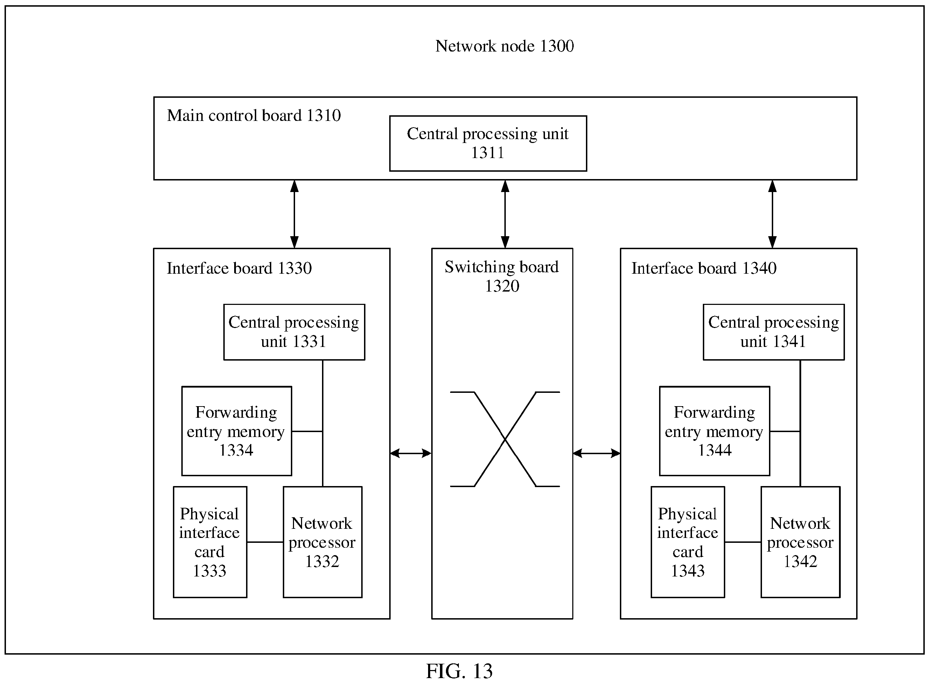

It may be understood that, as shown in FIG. 12, this embodiment of this application includes a plurality of interface boards, and uses a distributed forwarding mechanism. In this mechanism, operations on the interface board 1240 are basically similar to operations on the interface board 1230. For brevity, details are not described again. In addition, it may be understood that the processor 1231 and/or 1241 on the interface board 1230 in FIG. 12 may be dedicated hardware or a chip, for example, a network processor or an application-specific integrated circuit (application-specific integrated circuit) to implement the foregoing functions. This implementation is generally referred to as a manner of using dedicated hardware or a chip for processing on a forwarding plane. For a specific implementation of using the dedicated hardware or the chip such as the network processor, refer to the embodiment shown in FIG. 13. In another implementation, the processor 1231 and/or 1241 may alternatively be a general-purpose processor, for example, a general-purpose CPU, to implement the foregoing functions.

In addition, it should be noted that there may be one or more main control boards, and when there are a plurality of main control boards, the main control boards may include an active main control board and a standby main control board. There may be one or more interface boards, and a device having a stronger data processing capability provides more interface boards. If there are a plurality of interface boards, the plurality of interface boards can communicate with each other by using one or more switching boards, and the plurality of interface boards can jointly implement load balancing and redundancy backup. In a centralized forwarding architecture, the device may not need the switching board, and the interface board provides a function of processing service data of an entire system. In a distributed forwarding architecture, the device includes a plurality of interface boards. Data exchange between the plurality of interface boards may be implemented by using a switching board, and the plurality of interface boards can provide a large-capacity data exchange and processing capability. Therefore, a data access and processing capability of a network device in the distributed architecture is better than that of a device in the centralized architecture. A specific architecture that is to be used depends on a specific networking deployment scenario. This is not limited herein.

In some embodiments, the memory 1232 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, this is not limited hereto. The memory 1232 may exist independently, and is connected to the processor 1231 through a communication bus. The memory 1232 may alternatively be integrated with the processor 1231.

In some embodiments, the network interface 1233 may be configured to communicate with another device or a communication network such as an Ethernet, a radio access network (radio access network, RAN), or a wireless local area network (wireless local area network, WLAN) via any apparatus such as a transceiver. The network interface 1233 includes a wired network interface, and may further include a wireless network interface. The wired network interface may be, for example, an Ethernet interface. The Ethernet interface may be an optical interface, an electrical interface, or a combination thereof. The wireless network interface may be a WLAN interface, a cellular network communication interface, a combination thereof, or the like. When the network node is used as any network node in a domain, the network interface 1233 is configured to forward a data packet to another network node. When the network node is used as a head node in the domain, the network interface 1233 may be further configured to communicate with the controller in embodiments shown in FIG. 1 to FIG. 10, for example, receive a global timeslot orchestration parameter delivered by the controller.

In some embodiments, the network node may include a plurality of processors. Each of the processors may be a single-core processor, or may be a multi-core processor. The processor herein may be one or more devices, circuits, and/or processing cores for processing data (such as computer program instructions).

In some embodiments, the memory 1232 is configured to store program code for executing the solutions of this application. The processor 1231 may execute the program code stored in the memory 1232, so that the network node 1200 performs the processing steps of the network node or the device in embodiments shown in FIG. 1 to FIG. 10. For specific implementation, refer to detailed descriptions in embodiments shown in FIG. 1 to FIG. 10. Details are not described herein again.

In another embodiment, the program code may include one or more software modules. For example, when the receiving module 1101, the determining module 1102, and the forwarding module 1103 in the embodiment shown in FIG. 11 are implemented by using software, the program code may include a receiving module, a determining module, and a forwarding module. The receiving module is configured to receive a data packet sent by an upstream device. The determining module is configured to determine a data forwarding policy by using the data packet forwarding method provided in this embodiment of this application. The forwarding module is configured to forward the data packet based on the data forwarding policy. For a specific implementation, refer to detailed descriptions in embodiments shown in FIG. 11. Details are not described herein again.

FIG. 13 is a schematic diagram of a structure of another network node according to an embodiment of this application. The network node may be the network node in any one of the foregoing embodiments. In this embodiment, the network node 1300 includes a main control board 1310, an interface board 1330, a switching board 1320, and an interface board 1340. The main control board 1310 is configured to complete functions such as system management, device maintenance, and protocol processing. The switching board 1320 is configured to complete data exchange between interface boards (the interface board is also referred to as a line card or a service board). The interface boards 1330 and 1340 are configured to: provide various service interfaces (such as a POS interface, a GE interface, and an ATM interface), and forward a data packet. A control plane includes management and control units on the main control board 1310 and management and control units on the interface boards 1330 and 1340. The main control board 1310 mainly includes three types of functional units: a system management and control unit, a system clock unit, and a system maintenance unit. The main control board 1310, the interface board 1330, the interface board 1340, and the switching board 1320 are connected to a platform backboard through a system bus to implement interworking. A central processing unit 1331 on the interface board 1330 is configured to: control and manage the interface board, and communicate with a central processing unit on the main control board. A forwarding entry memory 1334 on the interface board 1330 is configured to store a forwarding entry, and a network processor 1332 forwards a data flow by searching the forwarding entry stored in the forwarding entry memory 1334.

A physical interface card 1333 of the interface board 1330 is configured to receive a data flow or other data sent by a terminal or another device. Specific implementation processes are not described herein again.

The network processor 1332 is configured to process a received data flow and the like. Specific functions of the network processor 1332 are not described herein one by one. For example, the network processor 1332 may execute program code, to enable the network node 1300 to perform the processing steps of the network node or the device in embodiments shown in FIG. 1 to FIG. 10. For specific implementation, refer to detailed descriptions in embodiments shown in FIG. 1 to FIG. 10. Details are not described herein again.

It may be understood that, as shown in FIG. 13, this embodiment of this application includes a plurality of interface boards, and uses a distributed forwarding mechanism. In this mechanism, operations on the interface board 1340 are basically similar to operations on the interface board 1330. For brevity, details are not described again. In addition, as described above, functions of the network processor 1332 and a network processor 1342 in FIG. 13 may be replaced with those of an application-specific integrated circuit (application-specific integrated circuit).

In addition, it should be noted that there may be one or more main control boards, and when there are a plurality of main control boards, the main control boards may include an active main control board and a standby main control board. There may be one or more interface boards, and a device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the device may not need the switching board, and the interface board provides a function of processing service data of an entire system. In a distributed forwarding architecture, the device may include at least one switching board. Data exchange between a plurality of interface boards is implemented by using the switching board, to provide a large-capacity data exchange and processing capability. Therefore, a data access and processing capability of a network device in the distributed architecture is better than that of a device in the centralized architecture. A specific architecture that is to be used depends on a specific networking deployment scenario. This is not limited herein.

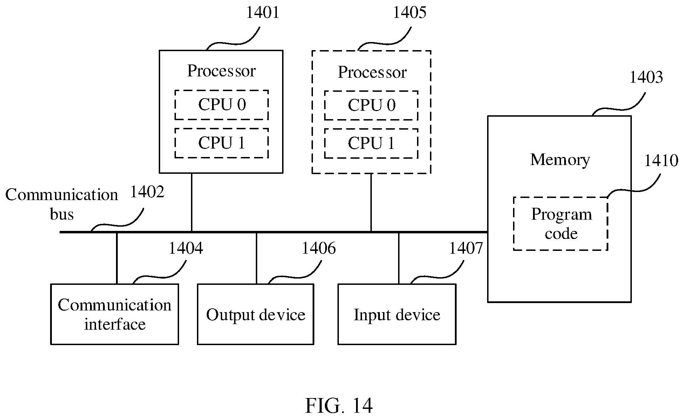

FIG. 14 is a schematic diagram of a structure of a network node according to an embodiment of this application. Optionally, the network node is the network node in embodiments shown in FIG. 1 to FIG. 10. The network node includes one or more processors 1401, a communication bus 1402, a memory 1403, and one or more communication interfaces 1404.

The processor 1401 is a general purpose central processing unit (central processing unit, CPU), a network processor (NP), a microprocessor, or is one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field-programmable gate array (field-programmable gate array, FPGA), a generic array logic (generic array logic, GAL), or any combination thereof. When the network node is any network node in embodiments of this application, the processor 1401 is configured to implement the data packet forwarding method provided in any one of embodiments shown in FIG. 2 to FIG. 10. When the network node is the intermediate node or the tail node in embodiments of this application, the processor 1401 is configured to implement the data packet forwarding method provided in any one of embodiments shown in FIG. 6 to FIG. 10. Specific functions are not described herein again.

The communication bus 1402 is configured to transfer information between the components. Optionally, the communication bus 1402 may be classified as an address bus, a data bus, a control bus, and the like. For ease of representation, only one thick line is used to represent the bus in the figure, but this does not mean that there is only one bus or only one type of bus.

Optionally, the memory 1403 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, this is not limited hereto. The memory 1403 exists independently, and is connected to the processor 1401 through the communication bus 1402, or the memory 1403 is integrated with the processor 1401.

The communication interface 1404 uses any apparatus such as a transceiver, and is configured to communicate with another device or a communication network. The communication interface 1504 includes a wired communication interface, or may optionally include a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like. When the network node is used as any network node in a domain, the communication interface 1404 is configured to forward a data packet to another network node. When the network node is used as a head node in the domain, the communication interface 1404 may be further configured to communicate with the controller in embodiments shown in FIG. 1 to FIG. 10, for example, receive a global timeslot orchestration parameter delivered by the controller.

Optionally, in some embodiments, the network node includes a plurality of processors, for example, the processor 1401 and a processor 1405 shown in FIG. 14. Each of the processors is a single-core processor, or is a multi-core processor. Optionally, the processor herein is one or more devices, circuits, and/or processing cores for processing data (such as computer program instructions).

In some embodiments, the network node further includes an output device 1406 and an input device 1407. The output device 1406 communicates with the processor 1401, and can display information in a plurality of manners. For example, the output device 1406 is a liquid crystal display (liquid crystal display, LCD), a light emitting diode (light emitting diode, LED) display device, a cathode ray tube (cathode ray tube, CRT) display device, or a projector (projector). The input device 1407 communicates with the processor 1401, and can receive an input of a user in a plurality of manners. For example, the input device 1407 is a mouse, a keyboard, a touchscreen device, or a sensing device.

In some embodiments, the memory 1403 is configured to store program code 1410 for executing the solutions of this application. The processor 1401 can execute the program code 1410 stored in the memory 1403, so that the network node performs the processing steps of the network node or the device in embodiments shown in FIG. 1 to FIG. 10. For specific implementation, refer to detailed descriptions in embodiments shown in FIG. 1 to FIG. 10. Details are not described herein again.

In another embodiment, the program code may include one or more software modules. For example, when the receiving module 1101, the determining module 1102, and the forwarding module 1103 in the embodiment shown in FIG. 11 are implemented by using software, the program code 1510 may include the receiving module 1101, the determining module 1102, and the forwarding module 1103. The receiving module is configured to receive a data packet sent by an upstream device. The determining module is configured to determine a data forwarding policy by using the data packet forwarding method provided in this embodiment of this application. The forwarding module is configured to forward the data packet based on the data forwarding policy. For a specific implementation, refer to related descriptions in the embodiment shown in FIG. 11. Details are not described herein again.

All or some of the foregoing embodiments may be implemented by using software, hardware, firmware, or any combination thereof. When software is used for implementing embodiments, all or some of embodiments may be implemented in a form of a computer program product. The computer program product includes one or more computer instructions. When the computer instructions are loaded and executed on the computer, all or a part of the procedure or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in this embodiment of this application may be a non-volatile storage medium, or in other words, may be a non-transitory storage medium.

It should be understood that "at least one" mentioned in this specification means one or more and "a plurality of" means two or more. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

The foregoing descriptions are merely embodiments of this application, but are not intended to limit this application. Any modification, equivalent replacement, or improvement made without departing from the spirit and principle of this application should fall within the protection scope of this application.

## Claims

1. A data packet forwarding method, wherein the method comprises:
receiving, by a network node, a first data packet, wherein the first data packet carries first traffic feature data, and the first traffic feature data is traffic feature data of a first data flow to which the first data packet belongs;
determining, by the network node, a data forwarding policy based on the first traffic feature data, wherein the data forwarding policy comprises a policy used when the network node forwards a data packet comprised in the first data flow; and
forwarding, by the network node, the first data packet based on the data forwarding policy.

2. The method according to claim 1, wherein the first traffic feature data is determined by an upstream device in a domain to which the network node belongs; or the first traffic feature data is determined by customer premises equipment.

3. The method according to claim 1 or 2, wherein the first data packet is an Internet Protocol version 6 IPv6 packet, the first traffic feature data is carried in an extension header of the first data packet, and the extension header is a hop-by-hop options header, a destination options header, or a segment routing header.

4. The method according to claim 3, wherein when the extension header is the segment routing header, the first traffic feature data is carried in a segment identifier SID field or a type-length-value TLV field of the segment routing header.

5. The method according to any one of claims 1 to 4, wherein the determining, by the network node, a data forwarding policy based on the first traffic feature data comprises:
if a variation between the first traffic feature data and stored reference traffic feature data exceeds a first threshold, updating, by the network node, a stored forwarding policy based on the first traffic feature data to obtain the data forwarding policy; or
if a variation between the first traffic feature data and stored reference traffic feature data does not exceed a first threshold, determining, by the network node, a stored forwarding policy as the data forwarding policy.

6. The method according to claim 5, wherein the network node is a head node in the domain to which the network node belongs; and
the updating, by the network node, a stored forwarding policy based on the first traffic feature data comprises:
obtaining, by the network node, a global timeslot orchestration parameter, wherein the global timeslot orchestration parameter indicates transmission timeslot occupation of a plurality of aggregated flows, and each aggregated flow comprises a plurality of data flows that flow from the network node to a same tail node in the domain; and
updating, by the network node, a stored local timeslot orchestration parameter based on the global timeslot orchestration parameter and the first traffic feature data, wherein the local timeslot orchestration parameter indicates transmission timeslot occupation of each data flow comprised in the plurality of aggregated flows when the global timeslot orchestration parameter is met.

7. The method according to claim 6, wherein the transmission timeslot occupation comprises at least one of a transmission timeslot occupied percentage and a transmission timeslot occupied location.

8. The method according to claim 5, wherein the updating, by the network node, a stored forwarding policy based on the first traffic feature data comprises:
updating, by the network node, a traffic shaping parameter of the network node based on the first traffic feature data, wherein the traffic shaping parameter comprises one or more of a committed information rate CIR, a committed burst size CBS, an excess burst size EBS, a peak information rate PIR, or a peak burst size PBS.

9. The method according to claim 5, wherein the updating, by the network node, a stored forwarding policy based on the first traffic feature data comprises:
updating, by the network node, a stored load balancing policy based on the first traffic feature data, wherein the load balancing policy indicates a transmission path for transmitting the data packet comprised in the first data flow.

10. The method according to any one of claims 5 to 9, wherein the reference traffic feature data is traffic feature data carried in a second data packet, the second data packet is a data packet received by the network node before the network node receives the first data packet, and the second data packet belongs to the first data flow.

11. The method according to any one of claims 5 to 9, wherein the reference traffic feature data is obtained by the network node by predicting traffic feature data of the first data flow at a first moment, and the first moment is a moment at which the first data packet is received.

12. The method according to claim 11, wherein before the determining, by the network node, a data forwarding policy based on the first traffic feature data, the method further comprises:
predicting, by the network node, the traffic feature data of the first data flow at the first moment based on a traffic feature model of the first data flow, to obtain the reference traffic feature data, wherein the traffic feature model is used to describe a change of a traffic feature of the first data flow.

13. The method according to claim 12, wherein after the receiving, by a network node, a first data packet, the method further comprises:
updating, by the network node, the traffic feature model based on the first traffic feature data.

14. The method according to any one of claims 1 to 4, wherein the determining, by the network node, a data forwarding policy based on the first traffic feature data comprises:
determining, by the network node, first aggregated flow feature data based on the first traffic feature data, wherein the first aggregated flow feature data is traffic feature data of a first aggregated flow to which the first data flow belongs; and
if a variation between the first aggregated flow feature data and stored reference aggregated flow feature data exceeds a second threshold, updating, by the network node, a stored forwarding policy based on the first aggregated flow feature data to obtain the data forwarding policy; or
if a variation between the first aggregated flow feature data and stored reference aggregated flow feature data does not exceed a second threshold, determining, by the network node, a stored forwarding policy as the data forwarding policy.

15. The method according to any one of claims 1 to 14, wherein the first traffic feature data comprises one or more of a flow rate, a bandwidth, traffic shaping feature data, traffic burst feature data, and traffic statistics feature data of the first data flow;
the traffic shaping feature data comprises the traffic shaping parameter configured on a device that determines the traffic feature data of the first data flow, wherein the traffic shaping parameter comprises one or more of the CIR, the CBS, the EBS, the PIR, and the PBS;
the traffic burst feature data comprises one or more of a burst size, burst duration, and a burst rate; and
the traffic statistics feature data comprises one or more of a maximum packet quantity per interval, a maximum payload size, an average packet quantity per interval, and an average payload size in a statistics interval.

16. A network node, wherein the network node comprises:
a receiving module, configured to receive a first data packet, wherein the first data packet carries first traffic feature data, and the first traffic feature data is traffic feature data of a first data flow to which the first data packet belongs;
a determining module, configured to determine a data forwarding policy based on the first traffic feature data, wherein the data forwarding policy comprises a policy used when the network node forwards a data packet comprised in the first data flow; and
a forwarding module, configured to forward the first data packet based on the data forwarding policy.

17. The network node according to claim 16, wherein the first traffic feature data is determined by an upstream device in a domain to which the network node belongs; or the first traffic feature data is determined by customer premises equipment.

18. The network node according to claim 16 or 17, wherein the first data packet is an IPv6 packet, the first traffic feature data is carried in an extension header of the first data packet, and the extension header is a hop-by-hop options header, a destination options header, or a segment routing header.

19. The network node according to claim 18, wherein when the extension header is the segment routing header, the first traffic feature data is carried in a segment identifier SID field or a type-length-value TLV field of the segment routing header.

20. The network node according to any one of claims 16 to 19, wherein the determining module comprises:
a first updating unit, configured to: if a variation between the first traffic feature data and stored reference traffic feature data exceeds a first threshold, update a stored forwarding policy based on the first traffic feature data to obtain the data forwarding policy; and
a first determining unit, configured to: if a variation between the first traffic feature data and stored reference traffic feature data does not exceed a first threshold, determine a stored forwarding policy as the data forwarding policy.

21. The network node according to claim 20, wherein the network node is a head node in the domain to which the network node belongs; and
the first updating unit comprises:
an obtaining subunit, configured to obtain a global timeslot orchestration parameter, wherein the global timeslot orchestration parameter indicates transmission timeslot occupation of a plurality of aggregated flows, and each aggregated flow comprises a plurality of data flows that flow from the network node to a same tail node in the domain; and
a first updating subunit, configured to update a stored local timeslot orchestration parameter based on the global timeslot orchestration parameter and the first traffic feature data, wherein the local timeslot orchestration parameter indicates transmission timeslot occupation of each data flow comprised in the plurality of aggregated flows when the global timeslot orchestration parameter is met.

22. The network node according to claim 21, wherein the transmission timeslot occupation comprises at least one of a transmission timeslot occupied percentage and a transmission timeslot occupied location.

23. The network node according to claim 20, wherein the first updating unit comprises:
a second updating subunit, configured to update a traffic shaping parameter of the network node based on the first traffic feature data, wherein the traffic shaping parameter comprises one or more of a committed information rate CIR, a committed burst size CBS, an excess burst size EBS, a peak information rate PIR, or a peak burst size PBS.

24. The network node according to claim 20, wherein the first updating unit comprises:
a third updating subunit, configured to update a stored load balancing policy based on the first traffic feature data, wherein the load balancing policy indicates a transmission path for transmitting the data packet comprised in the first data flow.

25. The network node according to any one of claims 20 to 24, wherein the reference traffic feature data is traffic feature data carried in a second data packet, the second data packet is a data packet received by the network node before the network node receives the first data packet, and the second data packet belongs to the first data flow.

26. The network node according to any one of claims 20 to 24, wherein the reference traffic feature data is obtained by the network node by predicting traffic feature data of the first data flow at a first moment, and the first moment is a moment at which the first data packet is received.

27. The network node according to claim 26, wherein the network node further comprises:
a prediction module, configured to predict the traffic feature data of the first data flow at the first moment based on a traffic feature model of the first data flow, to obtain the reference traffic feature data, wherein the traffic feature model is used to describe a change of a traffic feature of the first data flow.

28. The network node according to claim 27, wherein the network node further comprises:
an updating module, configured to update the traffic feature model based on the first traffic feature data.

29. The network node according to any one of claims 16 to 19, wherein the determining module comprises:
a second determining unit, configured to determine first aggregated flow feature data based on the first traffic feature data, wherein the first aggregated flow feature data is traffic feature data of a first aggregated flow to which the first data flow belongs;
a second updating unit, configured to: if a variation between the first aggregated flow feature data and stored reference aggregated flow feature data exceeds a second threshold, update a stored forwarding policy based on the first aggregated flow feature data to obtain the data forwarding policy; and
a third determining unit, configured to: if a variation between the first aggregated flow feature data and stored reference aggregated flow feature data does not exceed a second threshold, determine a stored forwarding policy as the data forwarding policy.

30. The network node according to any one of claims 16 to 29, wherein the first traffic feature data comprises one or more of a flow rate, a bandwidth, traffic shaping feature data, traffic burst feature data, and traffic statistics feature data of the first data flow;
the traffic shaping feature data comprises the traffic shaping parameter configured on a device that determines the traffic feature data of the first data flow, wherein the traffic shaping parameter comprises one or more of the CIR, the CBS, the EBS, the PIR, and the PBS;
the traffic burst feature data comprises one or more of a burst size, burst duration, and a burst rate; and
the traffic statistics feature data comprises one or more of a maximum packet quantity per interval, a maximum payload size, an average packet quantity per interval, and an average payload size in a statistics interval.

31. A network node, wherein the network node comprises a processor and a memory;
the memory is configured to store a program for performing the method according to any one of claims 1 to 15; and
the processor is configured to execute the program stored in the memory.

32. A data packet forwarding system, wherein the system comprises a communication device and a network node;
the communication device is configured to determine first traffic feature data and send a first data packet, wherein the first data packet carries the first traffic feature data, and the first traffic feature data is traffic feature data of a first data flow to which the first data packet belongs; and
the network node is configured to implement the steps of the method according to any one of claims 1 to 15.

33. The system according to claim 32, wherein the communication device is customer premises equipment, or the communication device is an upstream device in a domain to which the network node belongs.

34. A computer-readable storage medium, wherein the storage medium stores a computer program, and when the computer program is executed by a processor, the steps of the method according to any one of claims 1 to 15 are implemented.
